# EUROPEAN PATENT APPLICATION

(11) **EP 4 838 574 A1**
(43) Date of publication of application: **11.11.2026**
(21) Application number: 24929260.8
(22) Date of filing: 22.11.2024
(51) Int. Cl.: H01M 4/36, H01M 4/38, H01M 4/62, H01M 10/0525

(54) **SILICON-CONTAINING NEGATIVE ELECTRODE MATERIAL, MANUFACTURING METHOD FOR COATED SILICON-BASED MATERIAL, NEGATIVE ELECTRODE FILM, SOLID-STATE BATTERY AND ELECTRICAL APPARATUS**

(30) Priority: 13.03.2024 CN 202410288262
(71) Applicant: Contemporary Amperex Technology Co., Limited, Ningde, Fujian 352100 (CN)
(72) Inventor: YANG, Wu, Ningde, Fujian 352100 (CN); NING, Ziyang, Ningde, Fujian 352100 (CN); SHAO, Qinong, Ningde, Fujian 352100 (CN); WENG, Wei, Ningde, Fujian 352100 (CN); HU, Bobing, Ningde, Fujian 352100 (CN); ZHONG, Chengbin, Ningde, Fujian 352100 (CN); ZHONG, Ningkuan, Ningde, Fujian 352100 (CN)
(74) Representative: Ran, Handong
(86) International application number: PCT/CN2024/133943
(87) International publication number: WO 2025/189816

(57) **Abstract**

The present application relates to a silicon-containing negative electrode material, a manufacturing method for a coated silicon-based material, a negative electrode film, a solid-state battery and an electrical apparatus. The silicon-containing negative electrode material comprises a coated silicon-based material, and the coated silicon-based material comprises a silicon-based body and an electrolyte coating layer coating at least part of the surface of the silicon-based body, and the electrolyte coating layer contains a sulfide solid electrolyte.

## Description

### RELATED APPLICATION

The present application claims priority to Chinese Patent Application CN2024102882626, filed on March 13, 2024 and entitled "SILICON-CONTAINING NEGATIVE ELECTRODE MATERIAL, MANUFACTURING METHOD FOR COATED SILICON-BASED MATERIAL, NEGATIVE ELECTRODE FILM, SOLID-STATE BATTERY, AND ELECTRICAL APPARATUS", which is incorporated herein by reference in its entirety.

### TECHNICAL FIELD

The present application relates to the technical field of solid-state batteries, and further relates to a silicon-containing negative electrode material, a manufacturing method for a coated silicon-based material, a negative electrode film, a solid-state battery, and an electrical apparatus.

### BACKGROUND

The statements here are provided only as background information related to the present application and do not necessarily constitute prior art.

A non-flammable solid electrolyte is introduced in the solid-state battery to replace an organic electrolyte solution in a traditional secondary liquid battery, which greatly improves the battery safety. Improving the discharge capacity, rate performance, and cycle performance of the solid-state batteries is of great significance for advancing their industrialization.

### SUMMARY OF THE INVENTION

According to various embodiments and examples of the present application, the present application provides a silicon-containing negative electrode material, a manufacturing method for a coated silicon-based material, a negative electrode film, a solid-state battery, and an electrical apparatus. The silicon-containing negative electrode material includes the coated silicon-based material; and the solid-state battery prepared from the silicon-containing negative electrode material has good comprehensive performance in the aspects of discharge capacity, rate performance and cycle performance.

In a first aspect, the present application provides the silicon-containing negative electrode material, which includes the coated silicon-based material; the coated silicon-based material includes a silicon-based body and an electrolyte coating layer coating at least part of a surface of the silicon-based body; and the electrolyte coating layer includes a sulfide solid electrolyte.

In some embodiments, the silicon-containing negative electrode material is provided and includes the coated silicon-based material; the coated silicon-based material includes the silicon-based body and the electrolyte coating layer coating at least part of the surface of the silicon-based body; and the electrolyte coating layer includes the sulfide solid electrolyte.

In some embodiments, the silicon-containing negative electrode material is provided and includes the coated silicon-based material; the coated silicon-based material includes the silicon-based body and the electrolyte coating layer coating at least part of the surface of the silicon-based body; and the electrolyte coating layer includes the sulfide solid electrolyte;
in the coated silicon-based material, an ionic conductivity of the sulfide solid electrolyte is greater than or equal to 0.1 mS/cm under a test condition of 20°C, and a Young's modulus ratio of the sulfide solid electrolyte to the silicon-based body is less than 1 under the test condition of 30°C;
optionally, the ionic conductivity of the sulfide solid electrolyte is greater than or equal to 0.5 mS/cm under the test condition of 20°C; further optionally, the ionic conductivity of the sulfide solid electrolyte is greater than or equal to 1 mS/cm under the test condition of 20°C; and
optionally, the Young's modulus ratio of the sulfide solid electrolyte to the silicon-based body is less than or equal to 0.8 under the test condition of 30°C.

In some embodiments, the sulfide solid electrolyte includes a Li₂S-SiS₂-P₂S₅ ternary sulfide electrolyte;
optionally, in the Li₂S-SiS₂-P₂S₅ ternary sulfide electrolyte, an atomic molar ratio of an Li element to an Si element is recorded as R_{Li/Si}, and the atomic molar ratio of a P element to an Si element is recorded as R_{P/Si}, 1.80<R_{Li/Si}<1.84, 10.34<R_{P/Si}<0.38; and
further optionally, the Li₂S-SiS₂-P₂S₅ ternary sulfide electrolyte includes Li1.82SiP0.036S3.

In the coated silicon-based material of the silicon-containing negative electrode material, the sulfide solid electrolyte (which can be recorded as a first sulfide solid electrolyte) with high ionic conductivity is utilized to coat the silicon-based bod, and the electrolyte coating layer is arranged on the surface of the silicon-based body; the silicon-containing negative electrode material used for preparing the solid-state battery facilitates the conduction of active ions among particles of the silicon-based material, reduces the impedance, helps fully exert the capacity of the silicon-containing negative electrode material, and improves the rate performance and cycle performance of the solid-state battery. Moreover, the material of the electrolyte coating layer is softer than that of the silicon-based body, such that the adverse effect of volume expansion of the silicon-based material on interface contact can be relieved, and the stability of ion transmission in a negative electrode layer can be improved, thereby improving the cycle stability of the battery.

In some embodiments, the silicon-based body includes one or more selected from the group consisting of elemental silicon, a silicon-carbon compound, a silicon oxide, and a silicon-carbon compound; and
optionally, the silicon-based body includes the silicon-carbon compound, and the silicon-carbon compound includes a porous carbon matrix and nano-silicon located in pores of the porous carbon matrix.

The silicon-based material can be flexibly selected. The silicon-carbon compound has the following advantages: the nano-silicon is located in the porous carbon matrix, so that the expansion of silicon can be inhibited more effectively, and the cycle life of the battery can be prolonged more easily.

In some embodiments, the coated silicon-based material meets one or more of the following characteristics:
in the coated silicon-based material, a weight ratio of the sulfide solid electrolyte to the silicon-based body is 1: (20-70), optionally, 1: (45-55);
a weight proportion of the sulfide solid electrolyte in the coated silicon-based material is 1-5wt%, optionally, 1.5-2.5wt%; and
a thickness of the electrolyte coating layer is 1-100 nm, optionally, 10-50 nm.

By controlling one or more of the parameters of the weight ratio of the sulfide solid electrolyte to the silicon-based body, the weight proportion of the sulfide solid electrolyte in the coated silicon-based material, and the thickness of the electrolyte coating layer, the coating amount of the sulfide solid electrolyte can be adjusted. By controlling one or more of the parameters within the abovementioned range, on one hand, the effects of improving the discharge capacity, rate performance and cycle performance of the battery can be fully exerted, and on the other hand, high energy density can also be achieved.

In some embodiments, the Dᵥ50 or particle size of the silicon-based body is less than or equal to 50 µm, optionally, 1-50 µm, further optionally, 1-8 µm, and still further optionally, 4-6 µm.

By controlling the Dᵥ50 of the silicon-based body within the abovementioned range, the coating uniformity can improved, and furthermore, the discharge capacity, rate performance and cycle performance of the battery are better improved.

In some embodiments, the electrolyte coating layer includes dotted particles of the sulfide solid electrolyte; and
optionally, the particle sizes of the dotted particles of the sulfide solid electrolyte is less than or equal to 1 µm, optionally, 0.1-1 µm.

If the sulfide solid electrolyte is on the surface of the silicon-based body in a dotted particle form, the ionic conductivity can be improved, and the coating stability of the coating layer can be enhanced when the silicon-based material is subjected to volume expansion, and thus the electrochemical performance of thee battery is optimized.

By controlling the particle size of the dotted particles within the abovementioned range, and adjusting the contact area between the electrolyte material and the silicon-based material, the transmission capability of active ions can be improved.

In some embodiments, in at least part of the coated silicon-based material, the sulfide solid electrolyte is distributed on the surface of the silicon-based body in a discontinuous manner.

If the sulfide solid electrolyte is distributed on the surface of the silicon-based body in the discontinuous manner, the coating stability of the silicon-based material in volume expansion can be improved.

In some embodiments, the weight proportion of the coated silicon-based material in the silicon-containing negative electrode material is greater than or equal to 50wt%, optionally, 50-99wt%, further optionally, 85-97wt%.

By controlling the weight proportion of the coated silicon-based material in the silicon-containing negative electrode material within the abovementioned range, the comprehensive effects of promoting active ion conduction and improving the interface contact stability can be better exerted; on one hand, the conduction of the active ions among particles of the silicon-based material can be promoted, the capacity of the silicon-containing negative electrode material can be fully exerted, and the rate performance and cycle performance of the solid-state battery can be improved; and on the other hand, the adverse effect of the volume expansion of the silicon-based material on interface contact can be well inhibited, and the cycle stability of the battery can be improved.

In some embodiments, the silicon-containing negative electrode material further includes or does not include a blended solid electrolyte;
optionally, the blended solid electrolyte includes a blended sulfide solid electrolyte; and
further optionally, the blended solid electrolyte includes one or more selected from the group consisting of thio-LISICON, Li₆PS₅Cl, Li₁₀SnP₂S₁₂, Li₂S-P₂S₅ binary sulfur-based electrolytes, Li₂S-SiS₂ binary sulfur-based electrolytes, and Li₂S-B₂S₃ binary sulfur-based electrolytes.

In some embodiments, the weight proportion of the blended solid electrolyte in the silicon-containing negative electrode material is 0-30wt%, optionally, 0.5-5wt%.

The blended solid electrolyte is introduced into the silicon-containing negative electrode material, which can improve the overall ion conduction of the negative electrode layer of the solid-state battery. By controlling the weight proportion of the blended solid electrolyte in the silicon-containing negative electrode material within the abovementioned range, the overall ion conduction of the negative electrode layer of the solid-state battery can be improved while relatively high energy density is also realized.

In some embodiments, the silicon-containing negative electrode material meets one or more of the following characteristics:
the silicon-containing negative electrode material includes or does not include a negative electrode conductive agent; optionally, the weight proportion of the negative electrode conductive agent in the silicon-containing negative electrode material is 0-10wt%, optionally, 0.1-10wt%, and further optionally, 0.1-2wt%; and
the silicon-containing negative electrode material includes a negative electrode binder; and optionally, the weight proportion of the negative electrode binder in the silicon-containing negative electrode material is 0.1-20wt%, further optionally, 1-10wt%.

By controlling the weight proportion of the negative electrode conductive agent in the silicon-containing negative electrode material, the overall electron conduction and electrical contact performance in the negative electrode layer can be optimized, and the discharge capacity, rate performance and cycle performance of the battery can be improved.

By controlling the weight proportion of the negative electrode binder in the silicon-containing negative electrode material, the electrical contact among active particles in the negative electrode layer can be optimized, the capacity of a negative electrode is promoted to exert, and the rate performance and cycle performance of the battery can be improved.

In a second aspect, the present application provides a manufacturing method for a coated silicon-based material, and the method can be used for manufacturing the coated silicon-based material described in the first aspect of the present application.

In some embodiments, the manufacturing method for the coated silicon-based material is provided and includes the following steps:
physically blending a sulfide solid electrolyte with a silicon-based body, and sintering to form an electrolyte coating layer containing the sulfide solid electrolyte on at least part of the surface of the silicon-based body to obtain the coated silicon-based material.

In some embodiments, the sulfide solid electrolyte is defined as in the first aspect of the present application.

In some embodiments, the manufacturing method for the coated silicon-based material meets one or more of the following characteristics:
the sulfide solid electrolyte is granular, and the Dᵥ50 or particle size of the sulfide solid electrolyte is less than or equal to 1 µm, optionally, 0.1-1 µm;
the silicon-based body is granular, and the Dᵥ50 of the silicon-based body is less than or equal to 50 µm, optionally, 1-50 µm, further optionally, 1-8 µm, and still further optionally, 4-6 µm;
in the step of physically blending the sulfide solid electrolyte with the silicon-based body, the weight ratio of the sulfide solid electrolyte to the silicon-based body is 1: (20-70), optionally, 1: (45-55);
the method for physically blending is a dry blending method;
the sintering atmosphere for sintering is an argon atmosphere;
the sintering temperature for sintering is 550-650°C, optionally, 580-620°C; and
the sintering costs 6-10 h.

In some embodiments, the sulfide solid electrolyte is manufactured by the method including the following steps:
mixing precursor raw materials of the sulfide solid electrolyte, carrying out ball milling, and sintering in a sealed state to obtain the sulfide solid electrolyte.

In some embodiments, the manufacturing method for the coated silicon-based material meets one or more of the following characteristics:
a method for ball milling is a dry-process ball milling method;
ball milling beads used in ball milling include zirconia ball milling beads;
the rotating speed in ball milling is 300-400 r/min, optionally, 300-350 r/min; and
the ball milling costs 36-48 h.

In some embodiments, the coated silicon-based material is the coated silicon-based material in the silicon-containing negative electrode material described in the first aspect of the present application.

In a third aspect, the present application provides the negative electrode film, which includes a negative electrode current collector and a negative electrode active material layer located on at least one side of the negative electrode current collector, and the negative electrode active material layer includes the silicon-containing negative electrode material described in the first aspect of the present application.

In some embodiments, the negative electrode film is an all-solid-state negative electrode film.

In a fourth aspect, the present application provides the solid-state battery, which includes the negative electrode film described in the third aspect of the present application.

In some embodiments, the solid-state battery is a sulfide all-solid-state battery.

In some embodiments, the solid-state battery is a solid-state lithium-ion battery.

In a fifth aspect, the present application provides the electrical apparatus, which includes the positive electrode film described in the third aspect of the present application and the solid-state battery described in the fourth aspect of the present application.

Details of one or more implementation modes or embodiments of the present application are presented in the following accompanying drawings and description. Other characteristics, objectives, and advantages of the present application will become apparent from the specification, accompanying drawings, and claims.

### BRIEF DESCRIPTION OF THE DRAWINGS

In order to better describe and illustrate the implementation modes, embodiments, or examples provided in the present application, one or more accompanying drawings may be referred to. Additional details or examples used to describe the accompanying drawings should not be considered as limiting the scope of the disclosed application, the currently described implementation modes, embodiments, or examples, or any of the best modes currently understood for these present applications. It is also to be noted that the accompanying drawings are all presented in a simplified form, intended solely to conveniently and clearly assist in explaining the present application. Various dimensions of each part shown in the accompanying drawings are arbitrarily illustrated; they may be accurate or not drawn to scale. For example, in order to make the illustration clearer, the sizes of components are appropriately exaggerated in some places in the drawings. Unless otherwise specified, each part in the drawings is not drawn to scale. In each accompanying drawing in the present application, it does not limit the various dimensions of each part. Furthermore, in all the accompanying drawings, the same reference numerals indicate the same part. In the accompanying drawings:
FIG. 1 is a schematic structural diagram of coated silicon-based particles in a silicon-containing negative electrode material provided by one embodiment of the present application, the coated silicon-based particles include silicon-based bodies and electrolyte coating layers located on surfaces of the silicon-based bodies.
FIG. 2 is a schematic structural diagram of coated silicon-based particles in a silicon-containing negative electrode material provided by one embodiment of the present application, the coated silicon-based particles include silicon-based bodies and electrolyte coating layers located on surfaces of the silicon-based bodies, and the electrolyte coating layers include sulfide solid electrolytes (recorded as first sulfide solid electrolytes or coated sulfide solid electrolytes).
FIG. 3 is a schematic structural diagram of a positive electrode film according to one embodiment of the present application, the positive electrode film includes a positive electrode current collector and a positive electrode active material layer located on one side of the positive electrode current collector.
FIG. 4 is a schematic structural diagram of a positive electrode film according to one embodiment of the present application, the positive electrode film includes a positive electrode current collector and positive electrode active material layers located on both sides of the positive electrode current collector.
FIG. 5 is a schematic structural diagram of a solid-state cell according to one embodiment of the present application, the solid-state cell including a positive electrode layer, a solid electrolyte layer, and a negative electrode layer which are stacked in sequence;

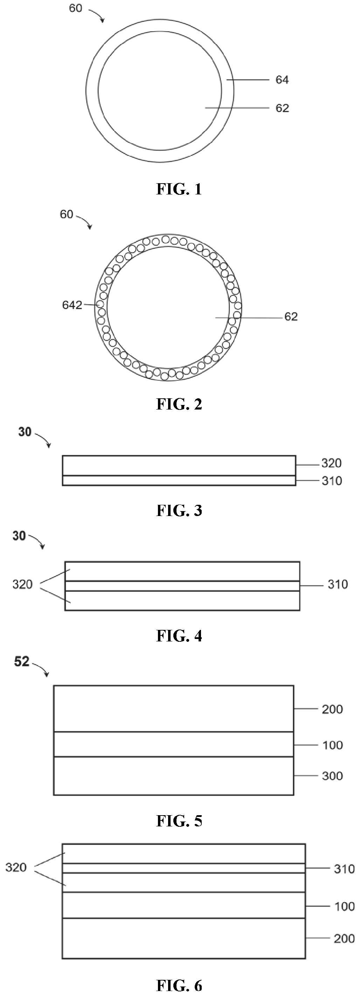

FIG. 6 is a schematic structural diagram of a solid-state cell shown in FIG. 5 according to one embodiment, the solid-state cell includes a positive electrode layer, a solid electrolyte layer, and a negative electrode layer which are stacked in sequence, in which, the positive electrode layer includes the positive electrode film in one embodiment of the present application, the positive electrode film includes a positive electrode current collector and positive electrode active material layers located on both sides of the positive electrode current collector, and the positive electrode active material layers are arranged between the positive electrode current collector and the solid electrolyte layer.
FIG. 7 is a schematic diagram of an all-solid-state battery cell according to one embodiment of the present application.
FIG. 8 is a decomposition diagram of an all-solid-state battery cell shown in FIG. 7 according to one embodiment of the present application.
FIG. 9 is a schematic diagram of a battery module according to one embodiment of the present application.
FIG. 10 is a schematic diagram of a battery pack according to one embodiment of the present application.
FIG. 11 is a decomposition diagram of a battery pack according to one embodiment of the present application shown in FIG. 10.
FIG. 12 is a schematic diagram of an electrical apparatus using an all-solid-state battery as a power supply according to one embodiment of the present application.

### Reference numerals:

60, coated silicon-based particle; 62, silicon-based body; 64, electrolyte coating layer; 642, coated sulfide solid electrolyte (sulfide solid electrolyte in electrolyte coating layer, recorded as first sulfide solid electrolyte); 300, negative electrode layer; 30, negative electrode film; 310, negative electrode current collector; 320, negative electrode active material layer; 100, solid electrolyte layer; 200, positive electrode layer; 1, battery pack; 2, upper box body; 3, lower box body; 4, battery module; 5, all-solid-state battery cell; 51, case; 52, solid-state cell; 53, cover plate; and 6, electrical apparatus.

It is to be understood that in each figure, the depicted dimensions of the solid-state cell 52, the negative electrode film 30, the negative electrode current collector 310, the negative electrode active material layer 320, the negative electrode layer 300, the solid electrolyte layer 100, the positive electrode layer 200, and other structures do not represent actual dimensions; the shapes and sizes of the coated silicon-based particle 60, the silicon-based body 62, the electrolyte coating layer 64, the coated sulfide solid electrolyte 642, and other substances or local structures of the substances depicted in each figure do not represent or are not used to limit the actual shapes and sizes of the substances, and the illustrated quantities do not represent or are not used to limit the actual quantities or proportions.

### DETAILED DESCRIPTION

Some embodiments of a silicon-containing negative electrode material, a manufacturing method for a coated silicon-based material, a negative electrode film, a solid-state battery, and an electrical apparatus of the present application are described in detail below with appropriate reference to the accompanying drawings. However, unnecessary detailed descriptions may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "range" disclosed in the present application is defined in the form of a lower limit and an upper limit, a given range is defined by selection of a lower limit and an upper limit, and the selected lower limit and upper limit define boundaries of the particular range. A range defined in this way may be inclusive or exclusive of end values, any one of which may be independently included or excluded, and may be combined in any way, that is, any lower limit may be combined with any upper limit to form a range. For example, if ranges of 60-120 and 80-110 are listed for a particular parameter, it is to be understood that the ranges of 60-110 and 80-120 are also expected. In addition, if the minimum range values 1 and 2 are listed, and if the maximum range values 3, 4 and 5 are listed, the following ranges can be all expected: 1-3, 1-4, 1-5, 2-3, 2-4 and 2-5. In the present application, unless otherwise specified, the numerical range "a-b" represents an abbreviated representation of any combination of real numbers between a and b, in which, both a and b are real numbers. For example, the numerical range "0-5" means that all the real numbers between "0-5" have been enumerated herein, and "0-5" is just an abbreviated representation of combinations of these numerical values. In addition, when a parameter is expressed as an integer greater than or equal to 2, it is equivalent to enumerating that the parameter is, for example, an integer of 2, 3, 4, 5, 6, 7, 8, 9, 10, 11, 12, or the like. For example, if a certain parameter is an integer selected from "2-10", it corresponds to listing the integers 2, 3, 4, 5, 6, 7, 8, 9, and 10.

In the present application, unless otherwise specified, "about" indicates a reasonable range of fluctuation around the given number, and the fluctuation range may vary depending on the type and magnitude of the number. For example, it may be within a range of ±10%, ±5%, ±2%, ±1%, etc. For example, by taking "about 20°C" with a tolerance of ±1°C, approximate numbers such as 19°C or 19.5°C within the approximate number range shown as "about 20°C" should also be included in the scope indicated by "about 20°C".

In the present application, terms such as "multiple", "various", "several", and "a number of", unless specifically limited, refer to quantities greater than or equal to 2. For example, "one or more" means one or at least two (more than or equal to). It is to be understood that in a case of referring to "any number of" items, it refers to a combination of any suitable number of items, that is, a combination of "any number of" items in a manner that does not conflict and can be implemented according to the present application.

Unless otherwise specified, all embodiments of the present application and optional embodiments may be combined with each other to form a new technical solution.

Reference herein to an "embodiment" means that a particular feature, structure, or property described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments. The "implementation" mentioned herein is understood similarly.

Those skilled in the art can understand that in the methods of various implementation modes or embodiments, the order in which the steps are written does not imply a strict execution sequence nor impose any limitation on the implementation process, and the detailed order of execution of each step should be determined according to its function and possible inherent logic. Unless otherwise specified, all steps in the present application can be performed sequentially or randomly, with a preference for sequential execution. For example, a method M includes steps (a) and (b), indicating that the method may include steps (a) and (b) performed in sequence, or steps (b) and (a) performed in sequence. For example, the method M may also include step (c), indicating that step (c) can be added to method M in any order, for example, the method M may include steps (a), (b), and (c), or steps (a), (c), and (b), or steps (c), (a), and (b), and so on.

In the present application, for open-ended technical features or technical solutions described with words such as "has/have", "contain", or "include", unless otherwise specified, the inclusion of additional members beyond those listed is not excluded. They can be considered as providing a closed feature or solution composed of the listed members, as well as an open-ended feature or solution that includes additional members beyond those listed. For example, if A includes a1, a2, and a3, unless otherwise specified, it may also include other members or may not include additional members. This can be considered as providing both the feature and solution in which "A consists of a1, a2, and a3" or "A is selected from a1, a2, and a3", as well as the feature or solution in which "A includes not only a1, a2, and a3, but also other members".

In the present application, unless otherwise stated, A (such as B) means that B is a non-limiting example of A and it is to be understood that A is not limited to B.

In the present application, the "optionally" and "optional" mean dispensable, that is, they mean any one selected from two parallel solutions of "presence" or "absence." If there are a plurality of instances of "optional" in a technical solution, unless otherwise specified, and there are no contradictions or interdependencies, each "optional" is independent. Unless otherwise stated, in the present application, descriptions such as "optionally include" or "optionally contain", taking "optionally include" as an example, it means "may include or may not include".

In the present application, unless otherwise stated, features or solutions corresponding the term "and/or" include any one of the two or more listed relevant items, as well as any and all combinations of the listed relevant items. In which, any and all combinations include any two of the listed relevant items, any more of the listed relevant items, or combinations of all the listed relevant items. For example, "A and/or B" refers to the groups consisting of A, B, and "the combination of A and B". In which, "containing A and/or B" can mean "containing A, containing B, and containing both A and B," or it can mean "containing A, containing B, or containing both A and B," which should be understood appropriately according to the context.

The terms "its combination," "any combination thereof," and "any manner of combination thereof" here include all appropriate combinations of any two or more of the listed items.

Here, the terms "suitable combination mode," "suitable mode," and "any suitable mode" use "suitable" based on enabling the implementation of the technical solutions of the present application.

Here, the terms such as "preferred", "preferable", "more preferable", "appropriate", "optimal", and "more optimal" are only used for describing implementation modes or embodiments with better effects and should be understood as not limiting the scope of protection of the present application. If a technical solution contains a plurality of instances of "preferred", unless otherwise specified, and provided there are no contradictions or mutual restrictions, each "preferred" should be considered independently.

In the present application, terms such as "further", "furthermore", "particular", "for example", "such as", "example", and "illustration" are used for describing purposes and indicate differences in content, but should not be understood as limiting the scope of protection of the present application.

In the present application, in the terms such as "first aspect", "second aspect", "third aspect", "fourth aspect", "fifth aspect", "first sulfide solid electrolyte", and "second sulfide solid electrolyte", the terms "first", "second", "third", "fourth", and "fifth" are used solely for descriptive purposes. They should not be understood as indicating or implying relative importance or quantity, nor as implicitly indicating the significance or quantity of the technical features referred to. Moreover, the terms like "first", "second", "third", "fourth", and "fifth" are intended only for non-exhaustive enumeration and description, and should be understood as not constituting a closed limitation on quantity.

In the present application, unless explicitly stated otherwise, the first characteristic being "on" or "under" the second characteristic may mean that the first and second characteristics are in direct contact, or that the first and second characteristics are indirectly in contact through an intermediate medium. In the present application, unless explicitly stated otherwise, the first characteristic being "on" or "under" the second characteristic can indicate a relative position relationship in terms of horizontal height, or it can merely indicate the existence of an attachment relationship without limiting the relative position in terms of horizontal height.

In the present application, the term "room temperature" generally refers to 4°C-35°C, and may refer to 20°C ± 5°C. In some implementation modes or embodiments of the present application, room temperature refers to 20°C-30°C.

In the present application, for units related to the data range, if a unit is only indicated after the right endpoint, it means that the units for both the left and right endpoints are the same. For example, 3-5 h indicates that the units for the left endpoint "3" and the right endpoint "5" are both hours (h), and they have the same meaning as 3h-5h. Similarly, other parameters such as temperature and size should be understood in the same way.

The weight or mass of relevant components in the implementation modes or embodiments in the present application can refer not only to the content of each component but also to the proportional relationship of the weight or mass between the components. Therefore, as long as the content of the relevant components in the implementation modes or embodiments in the present application is scaled up or down proportionally, it is within the scope described in the present application. Further, the mass involved in the implementation modes or embodiments in the present application can be in micrograms (µg), milligrams (mg), grams (g), kilograms (kg), or other mass units commonly known in the chemical industry. Unless otherwise specified, the mass ratio is equal to the corresponding weight proportion. For example, if the mass of substance A is m1 and its weight is W1, and the mass of substance B is m2 and its weight is W2, the mass ratio m1/m2 is numerically equal to the corresponding weight proportion W1/W2.

In the present application, unless otherwise stated, wt% refers to the weight percentage based on weight, which is numerically equal to the corresponding mass percentage based on mass. In the present application, for weight percentages, recording as "0" has the same meaning as "0wt%" and can be used interchangeably.

In the present application, unless otherwise specified, the units of the parameters are as follows: nm represents nanometer, µm represents micrometer, S/cm represents Siemens per centimeter, V represents volt, mPa•S represents millipascal•second, mg/cm² represents milligrams per square centimeter, g/cm² represents grams per square centimeter, g/cm³ represents grams per cubic centimeter, °C represents degrees Celsius, and mA/g represents milliampere per gram.

In the present application, "greater than or equal to", "greater than or equal to", and "≥" have the same meaning and can be used interchangeably; "less than or equal to", "less than or equal to", and "≤" have the same meaning and can be used interchangeably; "greater than" can equivalently be expressed as ">", and "less than" can equivalently be expressed as "<". In the present application, unless otherwise specified, "greater than or equal to" and "≥" can be considered to also provide the two options of "greater than" and "equal to". In the present application, unless otherwise specified, "less than or equal to" and "≤" can be considered to also provide the two options of "less than" and "equal to".

In the present application, the exemplary descriptions such as "in some implementation modes (or embodiments)" or "in one implementation mode (or embodiment)" are and may encompass, but are not limited to, the following meanings: these solutions can be combined with other solutions in an appropriate manner to form new technical solutions.

In the present application, unless otherwise specified, a "solid-state battery" as provided in the present application refers to a battery of which an electrolyte includes a solid electrolyte; generally, the solid-state battery includes a positive electrode layer, a solid electrolyte layer, and a negative electrode layer. During the charging and discharging process of the battery, active ions are intercalated and de-intercalated between the positive and negative electrode layers. The solid electrolyte layer has an effect of conducting ions between the positive and negative electrode layers, and it can also separate the positive and negative electrode layers so as to prevent short circuits; therefore, a conventional separator used in lithium-ion batteries may not be required in solid-state battery. A non-flammable solid electrolyte is introduced in a solid-state battery to replace an organic electrolyte solution in a traditional liquid lithium-ion battery, which greatly improves the battery safety. In addition to enhancing safety, the solid-state battery can better accommodate high-energy-density positive and negative electrode materials, reduce the system weight, and help improve the energy density.

In the present application, unless otherwise specified, the "solid electrolyte" refers to an electrolyte material or substance that exists in a solid form during storage and preparation of solid-state batteries and their components, as well as during the operation of solid-state batteries. It is to be understood to include, but is not limited to, solid electrolytes existing in a solid form at room temperature.

In the present application, unless otherwise specified, the electrode layer can be the positive electrode layer or the negative electrode layer; the "active substance" refers to a substance which is used in the electrode layer and capable of reversibly intercalating and de-intercalating the active ions. Unless otherwise specified, the "negative electrode active substance" refers to a substance which used in the negative electrode layer and is capable of reversibly intercalating and de-intercalating the active ions; and the "positive electrode active substance" refers to a substance which is used in the positive electrode layer and capable of reversibly de-intercalating and intercalating the active ions. During charging of the solid-state battery, the active ions de-intercalate from the positive electrode and intercalate into the negative electrode through the solid electrolyte layer; and during discharging of the solid-state battery, the active ions de-intercalate from the negative electrode and intercalate into the positive electrode. The active ions are not particularly limited; optionally, the active ions can be lithium ions, corresponding to a lithium-ion solid-state battery.

In the present application, the terms "electrode active material," "electrode active substance," "active material," and "active substance" have the same meaning and can be used interchangeably; the terms "positive electrode active substance" and "positive electrode active material" have the same meaning and can be used interchangeably; and the "negative electrode active substance" and "negative electrode active material" have the same meaning and can be used interchangeably. The terms "positive electrode active substance(material)" and "positive electrode active material" have the same meaning and can be used interchangeably; and the "negative electrode active substance(material)" and "negative electrode active material" have the same meaning and can be used interchangeably.

In the present application, unless otherwise specified, the "electrode active material layer" includes at least one of the positive electrode active material layer in the positive electrode layer and the negative electrode active material layer in the negative electrode layer; and depending on the specific context, the electrode active material layer may refer to either the positive electrode active material layer or the negative electrode active material layer. It is to be understood that the positive electrode active material layer contains the positive electrode active material, and the negative electrode active material layer contains negative electrode active material. In the present application, the "electrode active material layer" may also be abbreviated as the "active material layer".

In the present application, unless otherwise specified, the positive electrode layer includes at least the positive electrode active material layer.

In the present application, unless otherwise specified, the positive electrode active material layer includes at least the positive electrode active particles, and can also include or not include the positive electrode electrolyte particles.

In the present application, unless otherwise specified, the "negative electrode active particles" refer to the particles containing the negative electrode active substance, which are capable of reversibly intercalating and de-intercalating the active ions.

In the present application, unless otherwise specified, the "negative electrode electrolyte particles" and "negative electrode solid electrolyte" have the same meaning and can be used interchangeably, referring to the solid electrolyte that can be used in the negative electrode film or negative electrode layer. The negative electrode electrolyte particles can enhance the ion conduction capability of the negative electrode film or negative electrode layer and reduce interface impedance, thereby promoting the charge transfer efficiency between the negative electrode active substance and the external environment, as well as the full utilization of its capacity.

In the present application, unless otherwise stated, the positive electrode layer includes at least the positive electrode active material layer.

In the present application, unless otherwise specified, the positive electrode active material layer includes at least the positive electrode active particles, and usually includes positive electrode electrolyte particles.

In the present application, unless otherwise specified, the "positive electrode active particles" refer to particles containing the positive electrode active material, which are capable of reversibly intercalating and de-intercalating the active ions.

In the present application, unless otherwise stated, the "positive electrode electrolyte particles" and "positive electrode solid electrolyte" have the same meaning and can be used interchangeably, referring to the solid electrolyte that can be used in the positive electrode film or positive electrode layer. The positive electrode electrolyte particles can enhance the ion conduction capability of the positive electrode film or positive electrode layer and reduce interface impedance, thereby promoting the charge transfer efficiency between the positive electrode active substance and the external environment, as well as the full utilization of its capacity.

The interface contact in solid-state batteries is one of the bottlenecks limiting their performance, poor interface contact will affect the battery discharge capacity and also degrade its rate performance and cycle performance. However, due to the "solid-solid contact" characteristic in the solid-state batteries, the contact among the particles in the electrode layer includes numbers of point contacts, and electrode active substances cannot be completely wetted like an electrolyte solution in liquid batteries, which leads to insufficient interfacial ion transport in the electrode layer, resulting in unsatisfactory performance exerting of the solid-state batteries.

By doping solid electrolyte materials into the electrode layer, it is theoretically possible to enhance the ion conductivity of the electrode layer, improve the efficiency of charge transfer between the electrode active substances and the external environment, enable full utilization of its capacity, and reduce impedance. Among various solid electrolyte materials, sulfide solid electrolyte, due to its ultra-high ionic conductivity (about 10⁻³~10⁻² S/cm, nearly comparable to commercial liquid electrolytes) and excellent mechanical performance, such as good flexibility, has excellent ion conduction capability and good deformability, making it become one of the most promising solid electrolyte materials for practical applications and industrialization.

However, in the sulfide solid-state batteries with the sulfide solid electrolytes doped into the negative electrode layer, interface stability remains a limiting factor; for example, there are bottleneck issues such as high interfacial resistance between the sulfide solid electrolytes and the negative electrode materials, and the tendency for lithium dendrites to form, which can lead to battery short circuits. Therefore, constructing a stable interface between the sulfide solid-state battery and the negative electrode is one of the key factors in achieving high-performance sulfide solid-state batteries.

The activity of the negative electrode active material plays an important role in improving the energy density of the solid-state batteries. Silicon is one of the most outstanding negative electrode active materials. However, silicon negative electrodes still face the following problems: low electronic conductivity, which is not conducive to the construction of electronic pathways during battery charging and discharging; low lithium-ion diffusion coefficient, which hinders the effective transport of lithium ions during battery charging and discharging; and significant volume expansion during lithium intercalation; and these problems can lead to suboptimal battery capacity performance and rapid cycle degradation.

Based on this, according to various embodiments and examples of the present application, the embodiments and examples of the present application provide at least a silicon-containing negative electrode material, a manufacturing method for a coated silicon-based material, a negative electrode film, a solid-state battery, and an electrical apparatus. The silicon-containing negative electrode material includes the coated silicon-based material; and the solid-state battery prepared from the silicon-containing negative electrode material has good comprehensive performance in the aspects of discharge capacity, rate performance and cycle performance.

In the present application, unless otherwise specified, the sulfide solid electrolyte in the "electrolyte coating layer" is recorded as a "coated sulfide solid electrolyte" or "first sulfide solid electrolyte," and a "blended sulfide solid electrolyte" that may be present in the silicon-containing negative electrode material is recorded as a "second sulfide solid electrolyte".

In the present application, unless otherwise specified, the "coated sulfide solid electrolyte" and the "first sulfide solid electrolyte" have the same meaning and can be used interchangeably. Unless otherwise specified, the "blended sulfide solid electrolyte" and the "second sulfide solid electrolyte" have the same meaning and can be used interchangeably.

In a first aspect, the present application provides the silicon-containing negative electrode material, which includes the coated silicon-based material, and the coated silicon-based material includes a silicon-based body and an electrolyte coating layer coating at least part of the surface of the silicon-based body; and the electrolyte coating layer contains the sulfide solid electrolyte (which can be recorded as the first sulfide solid electrolyte or coated sulfide solid electrolyte).

Optionally, the first sulfide solid electrolyte in the electrolyte coating layer can be any suitable sulfide solid electrolyte known in the art, as long as it can facilitate the conduction of active ions and alleviate the adverse effects of volume expansion of the silicon-based material on interface contact, thereby improving the discharge capacity, rate performance, and cycle stability of the solid-state battery.

In some embodiments, the "first sulfide solid electrolyte" has a certain ionic conductivity and a certain modulus, which can better facilitate the conduction of active ions and enhance the interfacial contact stability of the negative electrode layer, as well as better improve the discharge capacity, rate performance, and cycle stability of solid-state batteries.

Optionally, in the coated silicon-based material, under a test condition of 20°C, the ionic conductivity of the first sulfide solid electrolyte can be greater than or equal to 0.1 mS/cm, optionally, greater than or equal to 0.5 mS/cm, and further optionally, greater than or equal to 1 mS/cm, or can also be any one of the following values or an interval formed by any two of the following values: 0.1 mS/cm, 0.2 mS/cm, 0.4 mS/cm, 0.5 mS/cm, 0.6 mS/cm, 0.7 mS/cm, 0.8 mS/cm, 0.9 mS/cm, 1 mS/cm, 1.2 mS/cm, 1.5 mS/cm, 1.6 mS/cm, 1.8 mS/cm, 2.0 mS/cm, 2.4 mS/cm, 2.5 mS/cm, etc.

Optionally, under a test condition of 30°C, the Young's modulus ratio (R_{E}) of the first sulfide solid electrolyte to the silicon-based body is less than 1, optionally, less than or equal to 0.8, and can also be any one of the following values, less than or equal to any one of the following values, or an interval formed by any two of the following values: 0.6, 0.65, 0.7, 0.75, 0.8, 0.85, 0.9, 0.95, etc. The Young's modulus ratio (R_{E}) of the first sulfide solid electrolyte to the silicon-based body can be selected from any one of the following range: R_{E}<1, R_{E}≤0.95, R_{E}≤0.8, 0.6≤R_{E}≤0.95, 0.6≤R_{E}≤0.8, etc.

In some embodiments, under the test condition of 20°C, the ratio of the ionic conductivity of the first sulfide solid electrolyte to the ionic conductivity of Li_{1.82}SiP_{0.036}S₃ is greater than or equal to 1.

In some embodiments, under the test condition of 30°C, the Young's modulus ratio of the first sulfide solid electrolyte to Li_{1.82}SiP_{0.036}S₃ is less than or equal to 1.

In the present application, unless otherwise specified, the "silicon-containing negative electrode material" refers to a material that can be used for preparing the negative electrode active material layer. It is to be understood that, since the electrolyte coating layer contains the sulfide solid electrolyte, the solid-state battery with the negative electrode layer including the silicon-containing negative electrode material is a sulfide solid-state battery.

In the present application, unless otherwise specified, the "coated silicon-based material" refers to a solid material. The "coated silicon-based material" is a material including the "coated silicon-based particles".

The structure of the coated silicon-based particles in the silicon-containing negative electrode material provided by one embodiment of the present application can be shown in FIG. 1, and the coated silicon-based particles 60 include silicon-based bodies 62 and electrolyte coating layers 64 located on the surfaces of the silicon-based bodies 62.

The structure of the coated silicon-based particles in the silicon-containing negative electrode material provided by one embodiment of the present application can be shown in FIG. 2, the coated silicon-based particles 60 include the silicon-based bodies 62 and the electrolyte coating layers 64 located on the surfaces of the silicon-based bodies 62, and the electrolyte coating layers 64 contain the sulfide solid electrolytes (recorded as the first sulfide solid electrolytes or coated sulfide solid electrolytes 642).

Unless otherwise specified, the "sulfide solid-state battery" refers to a solid-state battery in which the electrolyte includes a sulfide solid electrolyte. By way of example, the sulfide solid electrolytes can be located in at least one of the positive electrode layer, the solid electrolyte layer, and the negative electrode layer of the sulfide solid-state battery. In the sulfide solid-state battery in the embodiments or the examples of the present application, the sulfide solid electrolyte is located in at least the negative electrode layer of the sulfide solid-state battery. The sulfide solid-state battery can further be an all-solid-state battery.

In the present application, unless otherwise specified, the "all-solid-state battery" refers to a solid-state battery in which the electrolyte is entirely composed of solid electrolytes; meanwhile, the positive electrode layer, the negative electrode layer, and the electrolyte are all made of solid materials, and the battery does not contain any liquid electrolyte, and therefore it can be called the "all-solid-state battery".

In the present application, unless otherwise specified, the term "solid-state battery" in any implementation mode or embodiment may include, but is not limited to, a sulfide all-solid-state battery. Unless otherwise specified, the "sulfide all-solid-state battery" refers to the all-solid-state battery in which the electrolyte includes a sulfide solid electrolyte.

In the present application, unless otherwise specified, the "sulfide electrolyte", "sulfide electrolyte component", "sulfide solid electrolyte", and "sulfide solid electrolyte component" have the same meaning and can be used interchangeably, referring to the solid electrolyte components in sulfide forms, and the sulfide electrolytes include the sulfur (S) element present in the sulfide forms. The form of the "sulfide electrolyte" in the embodiments or examples of the present application is not particularly limited, it can be an independent sulfide electrolyte substance, or part of substance of the composite material, for example, it can be a sulfide electrolyte component in the electrolyte coating layer, or a blended sulfide solid electrolyte, or a sulfide solid electrolyte in the solid electrolyte layer.

In the present application, unless otherwise specified, the types of the sulfide electrolyte components contained in different positions or different materials of the "sulfide solid-state battery" may be the same or different. For example, the types of the coated sulfide solid electrolytes and the blended sulfide solid electrolytes can be the same or different.

In the coated silicon-based material of the silicon-containing negative electrode material, the sulfide solid electrolyte (which can be recorded as a first sulfide solid electrolyte) with high ionic conductivity is utilized to coat the silicon-based bod, and the electrolyte coating layer is arranged on the surface of the silicon-based body; the silicon-containing negative electrode material used for preparing the solid-state battery facilitates the conduction of active ions among particles of the silicon-based material, reduces the impedance, helps fully exert the capacity of the silicon-containing negative electrode material, and improves the rate performance and cycle performance of the solid-state battery. Moreover, the material of the electrolyte coating layer is softer than that of the silicon-based body, such that the adverse effect of volume expansion of the silicon-based material on interface contact can be relieved, and the stability of ion transmission in a negative electrode layer can be improved, thereby improving the cycle stability of the battery.

In the present application, unless otherwise specified, the "Young's modulus of the first sulfide solid electrolyte" can refer to the Young's modulus measured by the AFM method in a shear mode. Those skilled in the art can obtain this test result using conventional techniques in the art. The modulus of the first sulfide solid electrolyte can be measured using an atomic force microscope (AFM, such as Dimension icon/ Dimension iconXR) equipped with a QNM module. Powder samples can be dispersed onto a silicon wafer using a solvent (such as NMP) and dried before testing. By measuring the shear modulus under different pressures and fitting based on the data of pressure versus shear modulus, an average Young's modulus can be obtained, and this value can be used as the "Young's modulus" test value in the present application.

In the present application, unless otherwise specified, the ionic conductivity of the first sulfide solid electrolyte can be measured by electrochemical impedance spectroscopy (EIS). The test can be carried out by following modes: pouring 120 mg of solid electrolyte powder into a tablet mold with diameter of 10 mm, and pressing the electrolyte powder into a dense disc at 360 MPa; then clamping the solid-state electrolyte interphase sheet (solid electrolyte interphase sheet) with a cylindrical stainless steel current collector with diameter of 10 mm at 120 MPa in the mold, and then connecting the current collector to an electrochemical workstation, and performing electrochemical impedance test (EIS) on the solid electrolyte interphase sheet under bias voltage of 10 mV and within a frequency range of 10⁶-10Hz. In electrochemical impedance spectroscopy, a point that the curve intersected a Z' axis from a high-frequency region to a low-frequency region was recorded as the resistance R, and the ionic conductivity could be calculated by Equation (1):
$σ = \frac{1}{R} ⋅ \frac{d}{A}$ (1)
in which, d referred to the thickness of the solid electrolyte interphase sheet, and A referred to the contact area between the solid electrolyte interphase sheet and the current collector.

In some embodiments, the first sulfide solid electrolyte includes a Li₂S-SiS₂-P₂S₅ ternary sulfide electrolyte.

In the present application, unless otherwise specified, the "Li₂S-SiS₂-P₂S₅ ternary sulfide electrolyte" refers to a sulfide electrolyte containing the three sulfide forms Li₂S, SiS₂, and P₂S₅; and Li₂S, SiS₂, and P₂S₅ can be combined in any suitable molar ratio, as long as the function of the aforementioned first sulfide solid electrolyte can be achieved.

In the Li₂S-SiS₂-P₂S₅ ternary sulfide electrolyte, the atomic molar ratio of the Li element to the Si element is recorded as R_{Li/Si}, the atomic molar ratio of the P element to the Si element is recorded as R_{P/Si}, optionally, 1.80<R_{Li/Si}<1.84, 10.34<R_{P/Si}<0.38.

In some embodiments, the Li₂S-SiS₂-P₂S₅ ternary sulfide electrolyte includes Li_{1.82}SiP_{0.036}S₃, further, Li_{1.82}SiP_{0.036}S₃.

The Li₂S-SiS₂-P₂S₅ ternary sulfide electrolyte (such as Li_{1.82}SiP_{0.036}S₃) has extremely excellent ionic conductivity, and can better improve the rate performance of the battery.

Optionally, the silicon-based bodies can include one or more selected from the group consisting of elemental silicon, a silicon-carbon compound, a silicon oxide, and a silicon-carbon compound. In some embodiments, the silicon-based bodies include the silicon-carbon compounds, and further, the silicon-carbon compounds can include porous carbon matrixes and nano silicon located in pores of the porous carbon matrixes.

The silicon-based material can be flexibly selected. The silicon-carbon compound has the following advantages: the nano-silicon is located in the porous carbon matrix, so that the expansion of silicon can be inhibited more effectively, and the cycle life of the battery can be prolonged more easily.

In some embodiments, in the coated silicon-based material, the weight ratio of the first sulfide solid electrolyte to the silicon-based bodies can be 1: m, and the weight ratio can be 1: (20-70), optionally, 1: (45-55). Optionally, m can be any one of the following values or an interval formed by any two of the following values: 20, 25, 30, 35, 40, 45, 50, 55, 60, 65, 70, etc.

In some embodiments, the weight proportion of the first sulfide solid electrolyte in the coated silicon-based material can be 1-5wt%, optionally, 1.5-2.5wt%, and can also be any one of the following percentages or an interval formed by any two of the following percentages: 1wt%, 1.2wt%, 1.4wt%, 1.5wt%, 1.6wt%, 1.8wt%, 2wt%, 2.5wt%, 3wt%, 3.5wt%, 4wt%, 4.5wt%, 5wt%, etc.

In some embodiments, the thickness of the electrolyte coating layer is 1-100 nm, optionally, 10-50 nm, and can be any one of the following values or an interval formed by any two of the following values: 1 nm, 2 nm, 4 nm, 5 nm, 8 nm, 10 nm, 15 nm, 20 nm, 25 nm, 30 nm, 40 nm, 50 nm, 60 nm, 65 nm, 70 nm, 75 nm, 80 nm, 85 nm, 90 nm, 100 nm, etc.

In some embodiments, the coated silicon-based material meets any one or more of the following characteristics (any numerical parameter in the following characteristic can also be selected from appropriate value or ranges here):
in the coated silicon-based material, the weight ratio of the first sulfide solid electrolyte to the silicon-based bodies can be, but not limited to, 1: (20-70), optionally, 1: (45-55);
the weight proportion of the first sulfide solid electrolyte in the coated silicon-based material is 0.01-0.05wt%, optionally, 0.017-0.021wt%; and
the thickness of the electrolyte coating layer is 1-100 nm, optionally, 10-50 nm.

By controlling one or more of the parameters of the weight ratio of the sulfide solid electrolyte to the silicon-based body, the weight proportion of the sulfide solid electrolyte in the coated silicon-based material, and the thickness of the electrolyte coating layer, the coating amount of the sulfide solid electrolyte can be adjusted. By controlling one or more of the parameters within the abovementioned range, on one hand, the effects of improving the discharge capacity, rate performance and cycle performance of the battery can be fully exerted, and on the other hand, high energy density can also be achieved.

In some embodiments, the Dᵥ50 or particle size of the silicon-based body is less than or equal to 50 µm, optionally, 1-50 µm, further optionally, 1-8 µm, still further optionally, 4-6 µm, and can also be any one of the following values or an interval formed by any two of the following values: 1 µm, 2 µm, 4 µm, 5 µm, 6 µm, 8 µm, 10 µm, 12 µm, 15 µm, 16 µm, 18 µm, 20 µm, 25 µm, 30 µm, 35 µm, 40 µm, 45 µm, 50 µm, etc.

As described in the present application, the particle sizes of the materials can be characterized by the volume cumulative distribution of the particle size DᵥN (N represents any value selected from 0-100), which refers to the particle size corresponding to the cumulative volume distribution percentage of the material reaching N%, and the volume proportion of the materials with the particle sizes less than or equal to DᵥN is N%. DᵥN can be obtained from a cumulative volume distribution curve of the particle sizes of the materials, unless otherwise specified, in the cumulative volume distribution curve, it accumulates from zero on the small particle size side. Dᵥ50 is taken as an example for description. In the present application, unless otherwise specified, Dᵥ50 refers to the particle size corresponding to the cumulative volume distribution percentage of the material reaching 50%, and this parameter indicates that the particle sizes of the materials accounting for 50% by volume are less than or equal to Dᵥ50, and the particle sizes of the materials accounting for 50% by volume are greater than Dᵥ50. Those skilled in the art can understand the meaning of Dᵥ50 and can use commonly known instruments and methods in the field to measure it. For example, testing can be conveniently performed by a laser particle size analyzer, such as Mastersizer 2000E laser particle size analyzer from Malvern Instruments Ltd. (UK) or the LS-909 laser particle size analyzer (Omec), with reference to a GB/T 19077-2016 particle size distribution laser diffraction method. Further, the device models such as the Malvern 2000 (MasterSizer 2000) laser particle size analyzer can be used for testing according to the standard procedures GB/T19077-2016/ISO 13320:2009.

In the present application, unless otherwise specified, the "particle size" refers to the maximum diameter of the particles in each direction. In an optional example in the present invention, the particles are, for example, negative electrode active particles, coated silicon-based particles, and negative electrolyte particles.

In the present application, the particle sizes of the positive electrode electrolyte particles, the positive electrode active particles, and the coated positive electrode active particles can be tested and analyzed by particle size analysis methods such as the transmission electron microscope (TEM) and a laser particle analyzer. These testing methods can also be used for testing and analyzing parameters such as particle size, particle size distribution, and average values of certain size parameters of other particulate materials involved in the present application (such as raw materials used for providing the particle bodies).

By controlling the Dᵥ50 or particle size of particles of the silicon-based bodies within the abovementioned range, the uniformity of coating can be improved, furthermore, the discharge capacity, rate performance and cycle performance of the battery can be improved better.

In some embodiments, the electrolyte coating layer includes the dotted particles of sulfide solid electrolyte.

In some embodiments, the particle sizes of the dotted particles of the sulfide solid electrolyte is less than or equal to 1 µm, optionally, 0.1-1 µm, and can also be any one of the following values or an interval formed by any two of the following values: 0.1 µm, 0.2 µm, 0.3 µm, 0.4 µm, 0.5 µm, 0.6 µm, 0.7 µm, 0.8 µm, 0.9 µm, 1 µm, etc.

If the sulfide solid electrolyte is on the surface of the silicon-based body in a dotted particle form, the ionic conductivity can be improved, and the coating stability of the coating layer can be enhanced when the silicon-based material is subjected to volume expansion, and thus the electrochemical performance of thee battery is optimized.

By controlling the particle size of the dotted particles within the abovementioned range, and adjusting the contact area between the electrolyte material and the silicon-based material, the transmission capability of active ions can be improved.

In some embodiments, in at least part of the coated silicon-based material, the sulfide solid electrolyte is distributed on the surface of the silicon-based body in a discontinuous manner.

If the sulfide solid electrolyte is distributed on the surface of the silicon-based body in the discontinuous manner, the coating stability of the silicon-based material in volume expansion can be improved.

In some embodiments, the weight proportion of the coated silicon-based material in the silicon-containing negative electrode material is greater than or equal to 50wt%, optionally, 50-99wt%, further optionally, 75-97wt%, still further optionally, 85-97wt%, and can also be any one of the following percentages or an interval formed by any two of the following percentages: 50wt%, 55wt%, 60wt%, 65wt%, 70wt%, 75wt%, 80wt%, 85wt%, 90wt%, 95wt%, 96wt%, 97wt%, 99wt%, etc.

By controlling the weight proportion of the coated silicon-based material in the silicon-containing negative electrode material within the abovementioned range, the comprehensive effects of promoting active ion conduction and improving the interface contact stability can be better exerted; on one hand, the conduction of the active ions among particles of the silicon-based material can be promoted, the capacity of the silicon-containing negative electrode material can be fully exerted, and the rate performance and cycle performance of the solid-state battery can be improved; and on the other hand, the adverse effect of the volume expansion of the silicon-based material on interface contact can be well inhibited, and the cycle stability of the battery can be improved.

In some embodiments, the silicon-containing negative electrode material can include or does not include the blended solid electrolyte. The blended solid electrolyte is a negative electrode electrolyte particles.

In the present application, unless otherwise specified, the "blended solid electrolyte" is used in contrast to the "coated sulfide solid electrolyte". The blended solid electrolyte and the negative electrode active particles are separate and distinct particles; and the blended solid electrolyte coexists with the negative electrode active particles in silicon-containing negative electrode materials by physical blending. In contrast, the "coated sulfide solid electrolyte (first sulfide solid electrolyte)" forms the same coated silicon-based particle together with the silicon-based bodies, and the coated sulfide solid electrolyte coexists with the silicon-based bodies in silicon-containing negative electrode materials in a coating form.

In some embodiments, the blended solid electrolyte includes the blended sulfide solid electrolyte.

Optionally, the blended solid electrolytes can include one or more selected from the group consisting of thio-LISICON, Li₆PS₅Cl, Li₁₀SnP₂S₁₂, Li₂S-P₂S₅ binary sulfide-based electrolytes, Li₂S-SiS₂ binary sulfide-based electrolytes, and Li₂S-B₂S₃ binary sulfide-based electrolytes. The "Li₂S-P₂S₅ binary sulfide-based electrolytes" refer to the sulfide electrolytes containing two sulfide forms, Li₂S and P₂S₅. The "Li₂S-SiS₂ binary sulfide-based electrolytes" refer to the sulfide electrolytes containing two sulfide forms, Li₂S and SiS₂. The "Li₂S-B₂S₃ binary sulfide-based electrolytes" refer to the sulfide electrolytes containing two sulfide forms, Li₂S and B₂S₃. In the Li₂S-P₂S₅ binary sulfide-based electrolyte, Li₂S-SiS₂ binary sulfide-based electrolyte, and Li₂S-B₂S₃ binary sulfide-based electrolyte, the molar ratio of the two sulfide components in the binary sulfide-based electrolytes can be combined in any suitable manner and is not limited to 1:1.

In some embodiments, the weight proportion of the blended solid electrolyte in the silicon-containing negative electrode material can be, but not limited to, 0-30wt%, optionally, 0.5-5wt%, and can also be any one of the following percentages or an interval formed by any two of the following percentages: 0wt%, 0.5wt%, 1wt%, 1.5wt%, 2wt%, 2.5wt%, 3wt%, 3.5wt%, 4wt%, 5wt%, 6wt%, 8wt%, 10wt%, 12wt%, 15wt%, 16wt%, 18wt%, 20wt%, 25wt%, 30wt%, etc.

The blended solid electrolyte is introduced into the silicon-containing negative electrode material, which can improve the overall ion conduction of the negative electrode layer of the solid-state battery. By controlling the weight proportion of the blended solid electrolyte in the silicon-containing negative electrode material within the abovementioned range, the overall ion conduction of the negative electrode layer of the solid-state battery can be improved while relatively high energy density is also realized.

In some embodiments, the silicon-containing negative electrode material meets one or more of the following characteristics:
the silicon-containing negative electrode material can include or does not include a conductive agent (which can be recorded as a negative electrode conductive agent); optionally, the weight proportion of the negative electrode conductive agent in the silicon-containing negative electrode material can be, but not limited to, 0-10wt%, optionally, 0.1-10wt%, further optionally, 0.1-2wt%, and can also be any one of the following percentages or an interval formed by any two of the following percentages: 0wt%, 0.1wt%, 0.2wt%, 0.4wt%, 0.5wt%, 1wt%, 1.5wt%, 2wt%, 2.5wt%, 3wt%, 3.5wt%, 4wt%, 5wt%, 6wt%, 8wt%, 10wt%, etc.; and
the silicon-containing negative electrode material includes a binder (which can be recorded as a negative electrode binder); optionally, the weight proportion of the negative electrode binder in the silicon-containing negative electrode material can be, but not limited to, 0.1-20wt%, further optionally, 1-10wt%, and can also be any one of the following percentages or an interval formed by any two of the following percentages: 0.1wt%, 0.5wt%, 1wt%, 1.5wt%, 2wt%, 2.5wt%, 3wt%, 3.5wt%, 4wt%, 5wt%, 6wt%, 8wt%, 10wt%, 12wt%, 15wt%, 16wt%, 18wt%, 20wt%, etc.

By controlling the weight proportion of the negative electrode conductive agent in the silicon-containing negative electrode material, the overall electron conduction and electrical contact performance in the negative electrode layer can be optimized, and the discharge capacity, rate performance and cycle performance of the battery can be improved.

By controlling the weight proportion of the negative electrode binder in the silicon-containing negative electrode material, the electrical contact among active particles in the negative electrode layer can be optimized, the capacity of a negative electrode is promoted to exert, and the rate performance and cycle performance of the battery can be improved.

In a second aspect, the present application provides a manufacturing method for a coated silicon-based material, and the method can be used for manufacturing the coated silicon-based material described in the first aspect of the present application. The method can also be used for preparing the coated silicon-based particles.

In some embodiments, the manufacturing method for the coated silicon-based material is provided and includes the following steps:
physically blending a sulfide solid electrolyte with a silicon-based body, and sintering to form an electrolyte coating layer containing the sulfide solid electrolyte on at least part of the surface of the silicon-based body to obtain the coated silicon-based material.

In some embodiments, in another aspect, the present application provides a manufacturing method for coated silicon-based particles, which includes the following steps:
physically blending a sulfide solid electrolyte with a silicon-based body, and sintering to form an electrolyte coating layer containing the sulfide solid electrolyte on at least part of the surface of the silicon-based body to obtain the coated silicon-based particles.

In some other embodiments, the sulfide solid electrolyte is the defined as the sulfide solid electrolyte in the first aspect of the present application.

In some embodiments, the manufacturing method for the coated silicon-based material meets any one or any suitable combination of the following characteristics:
the sulfide solid electrolyte is granular, and the Dᵥ50 or particle size of the sulfide solid electrolyte is less than or equal to 1 µm, optionally, 0.1-1 µm, and can also be any one of the following values or an interval formed by any two of the following values: 0.1 µm, 0.2 µm, 0.3 µm, 0.4 µm, 0.5 µm, 0.6 µm, 0.7 µm, 0.8 µm, 0.9 µm, 1 µm, etc.;
the silicon-based bodies are granular, and the Dᵥ50 of the silicon-based bodies is less than or equal to 50 µm, optionally, 1-50 µm, further optionally, 1-8 µm, and still further optionally, 4-6 µm, and can also be any one of the following values or an interval formed by any two of the following values: 1 µm, 2 µm, 4 µm, 5 µm, 6 µm, 8 µm, 10 µm, 12 µm, 15 µm, 16 µm, 18 µm, 20 µm, 25 µm, 30 µm, 35 µm, 40 µm, 45 µm, 50 µm, etc.;
in the step of physically blending the sulfide solid electrolyte with the silicon-based body, the weight ratio of the sulfide solid electrolyte to the silicon-based bodies is recorded as 1:m, and can be 1: (20-70), optionally, 1: (45-55), further optionally, m can be any one of the following values or an interval formed by any two of the following values: 20, 25, 30, 35, 40, 45, 50, 55, 60, 65, 70, etc.;
the method for physically blending is a dry blending method;
the sintering atmosphere for sintering is an argon atmosphere;
the sintering temperature for sintering is 550-650°C, optionally, 580-620°C; and
the sintering costs 6-10 h.

In some embodiments, the sulfide solid electrolyte is manufactured by the method including the following steps:
mixing precursor raw materials of the sulfide solid electrolyte, carrying out ball milling, and sintering in a sealed state to obtain the sulfide solid electrolyte.

In some embodiments, the manufacturing method for the coated silicon-based material meets any one or any suitable combination of the following characteristics:
a method for ball milling is a dry-process ball milling method;
ball milling beads used in ball milling include zirconia ball milling beads;
the rotating speed in ball milling is 300-400 r/min, optionally, 300-350 r/min; and
the ball milling costs 36-48 h.

In some embodiments, the coated silicon-based material is the coated silicon-based material in the silicon-containing negative electrode material described in the first aspect of the present application.

In a third aspect, the present application provides the negative electrode film, which includes a negative electrode current collector and a negative electrode active material layer located on at least one side of the negative electrode current collector, and the negative electrode active material layer includes the silicon-containing negative electrode material described in the first aspect of the present application.

In some embodiments, the negative electrode film is an all-solid-state negative electrode film.

In the present application, unless otherwise specified, the "all-solid-state negative electrode film" refers to the negative electrode film composed entirely of solid materials.

In some embodiments, the negative electrode film is provided and includes a negative electrode current collector and a negative electrode active material layer located on at least one side of the negative electrode current collector, and the negative electrode active material layer includes the silicon-containing negative electrode material described in the first aspect of the present application.

In some embodiments, the negative electrode film is provided and includes the negative electrode current collector and the negative electrode active material layer located on at least one side of the negative electrode current collector, and the negative electrode active material layer includes the coated silicon-based material described here.

Optionally, the positive electrode film can be an independent positive electrode film sheet or positive electrode plate, and can be assembled into the solid-state battery; the positive electrode film can also be a positive electrode film layer in a multi-layer composite structure, for example, the composition materials of the positive electrode film layer can be pressed into the film on the surface of the solid electrolyte layer. As an optional example, the positive electrode film can be the positive electrode layer of the solid-state battery or a part of the positive electrode layer.

In another aspect, the present application provides the positive electrode active material layer, which is the positive electrode active material layer described in any one of the embodiments of the present application.

As defined above, the positive electrode active material layer includes at least the positive electrode active particles, and the positive electrode active particles contain the positive electrode active substances. It is to be understood that the negative electrode active particles include the abovementioned coated silicon-based materials.

Optionally, the weight proportion of negative electrode active particles in the negative electrode active material layer can be greater than or equal to 50wt%, optionally, 50-99wt%, further optionally, 75-97wt%, and still further optionally, 85-97wt%. The weight proportion of the negative electrode active particles in the negative electrode active material layer can be any one of the following weight percentages or an interval formed by any two of the following weight percentages: 50wt%, 55wt%, 60wt%, 65wt%, 70wt%, 75wt%, 80wt%, 85wt%, 90wt%, 95wt%, 96wt%, 97wt%, 99wt%, etc.

In some embodiments, the negative electrode active material layer can include the negative electrode electrolyte particles. Optionally, the weight proportion of the negative electrode electrolyte particles in the negative electrode active material layer can be 0-30wt%, optionally, 0.5-5wt%, and can also be any one of the following weight percentages or an interval formed by any two of the following weight percentages: 0wt%, 0.5wt%, 1wt%, 1.5wt%, 2wt%, 2.5wt%, 3wt%, 3.5wt%, 4wt%, 5wt%, 6wt%, 8wt%, 10wt%, 12wt%, 15wt%, 16wt%, 18wt%, 20wt%, 25wt%, 30wt, etc.

In some embodiments, the negative electrode active material layer includes the negative electrode active particles and the negative electrode electrolyte particles, in which, the negative electrode active particles include the coated silicon-based material.

The following are some other descriptions about the negative electrode film.

In the present application, unless otherwise specified, the "negative electrode film" refers to a film which can be used as the negative electrode of the solid-state battery, and includes at least the negative electrode active material layer and generally includes the negative electrode current collector. The negative electrode film includes the silicon-containing negative electrode material described in the first aspect of the present application.

In some embodiments, the negative electrode film includes a negative electrode current collector and a negative electrode active material layer arranged on at least one surface of the negative electrode current collector, and the negative electrode active material layer can be defined with reference to the above description.

In some embodiments, with reference to FIG. 3, the negative electrode film 30 includes the negative electrode current collector 310 and the negative electrode active material layer 320 located on one side of the negative electrode current collector 310.

In some embodiments, with reference to FIG. 4, the negative electrode film 30 includes the negative electrode current collector 310 and the negative electrode active material layers 320 located on both sides of the negative electrode current collector 310.

In the present application, unless otherwise specified, samples of the negative electrode active material layer can be obtained from the solid-state battery in the following manner: the battery can be disassembled to obtain samples of the active material layer of an electrode plate; further analysis on the active material layer can be performed using the following methods: the FIB-SEM nanoscale spatial dynamic resolution and layer-by-layer cutting technology are utilized to reconstruct a three-dimensional structure of the sample; in combination with analysis using the EDS elemental spectroscopy, the distribution and proportion of each element can be obtained; and finally, the composition, thickness and other parameters of each structural layer of the active material layer can be obtained through software-based quantitative analysis.

In the present application, unless otherwise specified, the types and contents of components such as the negative electrode active particles (including the coated silicon-based particles) and the negative electrode electrolyte particles in the negative electrode active material layer of the solid-state battery can be detected by the following methods: the structure and composition of the negative electrode active material layer can be analyzed and tested by focused ion beam (FIB) technology, scanning electron microscopy (SEM), and elemental analysis techniques; for example, it can be obtained by a combination of cryo-focused ion beam (FIB) for serial slicing, cross-sectional SEM for morphology observation, and elemental energy spectrum of energy-dispersive spectroscopy (EDS), as well as three-dimensional reconstruction analysis software for analysis. For example, the cryo-focused ion beam (FIB) can be used for finely slicing the sample layer by layer along the transverse direction at different thickness positions (with the smallest scale reaching nanometer-thin slices) and separating to obtain samples from different layers at various positions through the thickness; the scanning electron microscopy (SEM) can then be used for analyzing the morphology, structure, and element distribution of each cross-section under continuous FIB slicing; and in combination with three-dimensional structural reconstruction software, the three-dimensional structure of the sample can be reconstructed, and the mass and/or volume of different regions of the to-be-tested sample are estimated. As an optional example, the above parameter analysis can be performed by an FEI Scios 2HiVac device.

In the present application, unless otherwise specified, the particle sizes and particle size distribution of each solid particle in the negative electrode active material layer sample of the solid-state battery can be analyzed by the following mode, and it may include the analysis for the particle size and particle size distribution of the particle components such as the negative electrode active particles and the negative electrode electrolyte particles; in the present application, unless otherwise specified, FIB-SEM and EDS can be combined to test to obtain two-dimensional images with different colors on different components, the particle components such as the negative electrode active particles and the negative electrode electrolyte particles can be distinguished according to component types, and the particle size and particle size distribution of the particle components such as the negative electrode active particles and the negative electrode electrolyte particles can be obtained by analyzing using built-in software of the EDS instrument.

In another aspect, the present application provides a negative electrode film sheet, which includes the negative electrode current collector and the negative electrode active material layer located on at least one side of the negative electrode current collector, and the negative electrode active material layer includes the silicon-containing negative electrode material described in the first aspect of the present application.

The negative electrode film sheet can be directly used as the negative electrode plate to be assembled into the solid-state battery, but not limited thereto.

In a fourth aspect, the present application provides the solid-state battery, which includes the negative electrode film described in the third aspect of the present application.

In some embodiments, the solid-state battery is provided, which includes the positive electrode layer, the solid electrolyte layer, and the negative electrode layer; and the negative electrode layer includes the negative electrode film described in the third aspect of the present application.

In any related embodiments in all aspects, the solid-state battery may be a sulfide solid-state battery. The definition of the sulfide solid-state battery can be referred to above.

In any related embodiments in all aspects, the solid-state battery may be a sulfide all-solid-state battery. The definition of the sulfide all-solid-state battery can be referred to above.

In any related embodiment in abovementioned aspects, the solid-state battery can be a solid-state lithium-ion battery, further, an all-solid-state lithium-ion.

In a fifth aspect, the present application provides the electrical apparatus, which includes at least one selected from the group consisting of the negative electrode film described in the third aspect of the present application and the solid-state battery described in the fourth aspect of the present application.

In the present application, the electrochemical performance of the battery, unless otherwise specified, generally includes the overall performance in terms of discharge capacity, rate performance, and cycle performance.

The solid-state battery includes at least one solid-state battery cell. The solid-state battery can include one or more solid-state battery cells.

In the present application, unless otherwise specified, the "solid-state battery cell" refers to a basic unit capable of transforming chemical energy and electrical energy into each other, with all components being solid-state. In some embodiments, the solid-state battery cell may be an all-solid-state battery cell.

Optionally, the solid-state battery cell (which can be the all-solid-state battery cell) can include the positive electrode layer, the solid electrolyte layer, and the negative electrode layer, and the solid electrolyte layer is positioned between the positive electrode layer and the negative electrode layer. During the charging and discharging process of the battery, active ions are intercalated and de-intercalated between the positive and negative electrode layers. The solid electrolyte layer has an effect of conducting ions between the positive and negative electrode layers, and it can also separate the positive and negative electrode layers so as to prevent the positive and negative electrodes from short circuits.

Unless otherwise specified, the negative electrode layer in the solid-state battery includes the carbon-containing negative electrode material described in the first aspect of the present application.

Unless otherwise specified, the negative electrode layer in the solid-sate battery includes the negative electrode film described in the third aspect of the present application. The negative electrode layer can be only formed by the negative electrode film described in the third aspect of the present application, and the negative electrode film described in the third aspect of the present application can be compounded with other films suitable for the negative electrode to form the negative electrode layer.

The followings are some descriptions about the positive electrode film and the positive electrode layer.

The positive electrode layer can be provided by a positive electrode plate or the positive electrode film sheet which can be used in the solid-state battery in the field, and the constituent materials of the positive electrode layer can be directly pressed on the surface of one side of the solid electrolyte layer to form a positive electrode film layer. The positive electrode film sheet can be compounded with other films suitable for the positive electrode to form the positive electrode plate or the positive electrode layer.

The positive electrode layer can be prepared by a dry method or a wet method. For example, the film can be formed by dry pressing. For another example, it can be coated into a film using the wet method.

In some embodiments, the positive electrode film includes the positive electrode current collector and the positive electrode active material layer arranged on at least one surface of the positive electrode current collector, and the definition of the positive electrode active material layer can refer to above.

In some embodiments, the positive electrode current collector can be a metal foil or a composite current collector. For example, if it is the metal foil, an aluminum foil can be adopted. In the positive electrode current collector, the composite current collector can include a high molecular substrate layer and a metal layer formed on at least one surface of the high molecular substrate layer. In the positive electrode current collector, the composite current collector can be obtained by forming a metal material on the high polymer material substrate. In the negative electrode current collector, the optional example of the metal materials can include at least one or more selected from the group consisting of copper, a copper alloy, nickel, a nickel alloy, titanium, a titanium alloy, silver, a silver alloy, etc. In the positive electrode current collector, the optional example of the high polymer material substrate can include one or more of polypropylene (PP), polyethylene terephthalate (PET), polybutylene terephthalate (PBT), polystyrene (PS), polyethylene (PE) and the like.

Optionally, in the positive electrode film or the positive electrode layer, the thickness of the positive electrode active material layer is 30-400 µm, optionally, 60-130 µm, and it can also be any one of the following thicknesses or an interval formed by any two of the following thicknesses: 30 µm, 40 µm, 50 µm, 60 µm, 80 µm, 100 µm, 120 µm, 130 µm, 140 µm, 150 µm, 160 µm, 180 µm, 200 µm, etc.

In the present application, unless otherwise specified, the "thickness of the positive electrode active material layer" in the positive electrode film refers to the total thickness in the positive electrode film. If the positive electrode active material layers are arranged on both sides of the positive electrode current collector, the thickness of the positive electrode active material layer refers to the sum of the thicknesses of the two sides.

As an optional example, the positive electrode current collector has two surfaces which are deviated from each other in the thickness direction, and the positive electrode active material layer is arranged on any one or both of the two surfaces, which are deviated from each other, of the positive electrode current collector.

The positive electrode layer includes the positive electrode active material layer, the positive electrode active material layer includes the positive electrode active particles, and the positive electrode active particles contain the positive electrode active substances.

Optionally, the weight percentage of the positive electrode active particles or the positive electrode active substances in the positive electrode active material layer can be ≥70wt%, further, ≥80wt%, still further, ≥90wt%, and can also be any one of the following weight percentages or an interval formed by any two of the following weight percentages: 70wt%, 75wt%, 80wt%, 82wt%, 84wt%, 85wt%, 86wt%, 88wt%, 90wt%, 92wt%, 94wt%, 95wt%, 96wt%, 97wt%, 98wt%, 99wt%, etc.

In some embodiments, the positive electrode active material layer includes the positive electrode electrolyte particles. Optionally, the weight ratio of the positive electrode electrolyte particles in the positive electrode active material layers can be 0.1-30wt%, optionally, 5-20wt%, and the weight ratio of the positive electrode electrolyte particles in the positive electrode active material layers can also be any one of the following weight percentages or an interval formed by any two of the following weight percentages: 0.1wt%, 0.2wt%, 0.4wt%, 0.5wt%, 0.6wt%, 0.8wt%, 1wt%, 1.2wt%, 1.5wt%, 1.6wt%, 1.8wt%, 2wt%, 2.5wt%, 3wt%, 3.5wt%, 4wt%, 5wt%, 6wt%, 7wt%, 8wt%, 9wt%, 10wt%, 12wt%, 14wt%, 15wt%, 16wt%, 18wt%, 20wt%, 22wt%, 24wt%, 25wt%, 26wt%, 28wt%, 30wt%, and the like.

In some embodiments, the positive electrode active material layer includes the positive electrode active particles and the positive electrode electrolyte particles.

In some embodiments, the positive electrode active substances in the positive electrode active particles include the oxide positive electrode active substances, further, the positive electrode active substances include the lithium transition metal oxides.

Optionally, the oxide positive electrode active materials (such as the lithium transition metal oxides) in the positive electrode active materials may include but are not limited to the lithium transition metal oxides that are known in this art for the positive electrode active materials in the solid-state batteries, but not limited thereto. The examples of the lithium transition metal oxides may include, but are not limited to, one or more of lithium-cobalt oxides, lithium-nickel oxides, lithium-manganese oxides, lithium-nickel-cobalt oxides, lithium-manganese-cobalt oxides, lithium-nickel-manganese oxides, lithium-nickel-cobalt-manganese oxides, lithium-nickel-cobalt-aluminum oxides, and their modified compounds. The optional examples of the lithium-cobalt oxides may include LiCoO₂; the optional examples of the lithium-nickel oxides may include LiNiO₂; the optional examples of the lithium manganese oxides may include LiMnO₂, LiMn₂O₄, etc.; the optional examples of the lithium-nickel-cobalt-manganese oxides may include LiNi_{1/3}Co_{1/3}Mn_{1/3}O₂ (also known as NCM₃₃₃), LiNi_{0.5}Co_{0.2}Mn_{0.3}O₂ (also known as NCM₅₂₃), LiNi_{0.5}Co_{0.25}Mn_{0.25}O₂ (also known as NCM₂₁₁), LiNi_{0.6}Co_{0.2}Mn_{0.2}O₂ (also known as NCM₆₂₂), LiNi_{0.8}Co_{0.1}Mn_{0.1}O₂ (also known as NCM₈₁₁), etc. The optional examples of the lithium-nickel-cobalt-aluminum oxides may include LiNi_{0.80}Co_{0.15}Al_{0.05}O₂.

Taking a solid-state battery with active ions including lithium ions as an example, it is to be understood that during the charging and discharging process of the solid-state battery, the lithium (Li) will intercalate and deplete, and the Li content in the positive electrode layer (including the positive electrode film here) varies when the battery is discharged to different states. In the exemplary descriptions of the positive electrode active material in the present application, unless otherwise specified, the Li content can refer to the initial state of the material or a non-initial state after charge-discharge cycles. The positive electrode active material is applied to the positive electrode layer of the solid-state battery system, and after charge-discharge cycling, the Li content in the positive electrode active material within the positive electrode layer typically changes. The Li content may be measured in atomic mole content, but is not limited thereto. In the "Li content refers to the initial state of the material", the initial state of the material refers to the state before placed in the positive electrode layer. It is to be understood that new materials or substances obtained by appropriately modifying the listed positive electrode active materials also fall within the scope of positive electrode active materials, and such appropriate modifications refer to acceptable modification methods for the positive electrode active material, the optional examples include coating modifications. In the exemplary descriptions of the positive electrode active material in the present application, the oxygen (O) content is usually the theoretical value, and oxygen release from the lattices will cause the atomic mole content of oxygen to change, so the actual O content may fluctuate. The O content can also be measured in atomic mole content, but is not limited thereto.

In some embodiments, besides the oxide positive electrode active materials (such as the lithium transition metal oxides), the positive electrode active materials may also include other positive electrode active materials known in the art that can be used in the solid-state batteries. As an optional example, other positive electrode active materials that can be used in the solid-state batteries may include one or more of the following materials: lithium-contained phosphates with an olivine structure and their modified compounds. However, the present application is not limited to these materials, and other known materials that can be used as the positive electrode active materials for the solid-state batteries may also be used. These positive electrode active materials may be used alone or in combination of two or more. The optional examples of the lithium-containing phosphates with the olivine structure may include, but are not limited to, one or more of lithium iron phosphate, lithium iron phosphate-carbon composites, lithium manganese phosphate, lithium manganese phosphate-carbon composites, lithium manganese iron phosphate, and lithium manganese iron phosphate-carbon composites. The examples of lithium iron phosphate include LiFePO₄ (also known as LFP). The examples of lithium manganese phosphate include LiMnPO₄.

In some embodiments, the lithium transition metal oxides include one or more of lithium cobalt oxides, lithium nickel oxides, lithium manganese oxides, lithium-nickel-cobalt oxides, lithium-manganese-cobalt oxides, lithium-nickel-manganese oxides, lithium-nickel-cobalt-manganese oxides, lithium-nickel-aluminum-cobalt oxides, lithium manganese-rich positive electrode active substances (the definition can be referred to the following) and any one of the modification forms of the positive electrode active substances; and the modification forms can include one or more of doping modification and coating modification.

In some embodiments, the positive electrode active material layer includes a conductive agent (which can be marked as a positive electrode conductive agent). As an optional example, the positive electrode conductive agent can be a carbon conductive agent. Optionally, the carbon conductive agent can include one or more of superconducting carbon, acetylene black, carbon black, Ketjen black, carbon dots, carbon nanotubes, grapheme, and carbon nanofibers. In some embodiments, the positive electrode conductive agent can include, but is not limited to, one or more of SP, KS-6, acetylene black, Ketjen black ECP with a branched chain structure, SFG-6, vapor-grown carbon fibers VGCF, carbon nanotubes (CNTs), graphene and the like. Optionally, the weight percentage of the positive electrode conductive agent in the positive electrode active material layer can be 0-10wt%, further, 0-8wt%, further, 0-5wt%, and further, 0.1-3wt%, based on the total weight of the positive electrode active material layer. The weight percentage of the positive electrode conductive agent in the positive electrode active material layer can also be 0.1-5wt%, 0.2-5wt%, 0.5-5wt%, 0.1-3wt%, and the like.

In some embodiments, the positive electrode active material layer optionally includes the binder (which can be recorded as a positive electrode binder). As an optional example, the positive electrode binder can include one or more selected from the group consisting of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin. Generally, the weight percentage of the binder in the positive electrode active material layer can be 0-10wt%, further 0-8wt%, further 0.1-5wt%, and further 1-5wt% based on the total weight of the positive electrode active material layer.

Optionally, the positive electrode active material layer may include the positive electrode active particles, the positive electrode electrolyte particles, the positive electrode conductive agent, and the binder. The types and contents of each component can be referred to in the context in the present application.

The positive electrode film can be prepared by the dry method or wet method. For example, the film can be formed by dry pressing. For another example, wet coating and drying film formation can be carried out.

In some embodiments, the positive electrode film sheet (it can be used as a positive electrode plate) can be prepared by the following steps: performing dry-state mixing on each component for preparing the positive electrode film sheet, such as the positive electrode active particles, the positive electrode electrolyte particles, the positive conductive agent, the optional positive electrode binder, and any other component, then heating, pressurizing and kneading the uniformly mixed material to form a bulk material, performing hot rolling to form a self-support positive electrode plate, and performing hot rolling and combination on the self-support positive electrode plate and a positive electrode current collector to obtain the positive electrode film sheet, in which, the self-support positive electrode plate can be combined with at least one side (single side or both sides) of the positive electrode current collector. Optionally, a double planetary stirrer can be used for performing dry-state mixing. Optionally, an internal mixer can be used for performing heating, pressurizing and kneading. Optionally, the temperature for hot rolling can be 75-85°C, further 78°C, 80°C, 82°C and the like. A method for assembling the solid-state battery by the positive electrode film sheet can be suitable for industrial mass production. The negative electrode film sheet or the negative electrode plate can be manufactured by similar methods.

In some embodiments, the positive electrode film sheet can be prepared by the following modes: dispersing each component for preparing the positive electrode film sheet, such as the positive electrode active particles, the positive electrode electrolyte particles, the positive conductive agent, the binder (positive electrode binder) and any other component, into an organic solvent to form positive electrode slurry. Further, the positive electrode slurry is coated on at least one side surface of the positive electrode current collector, and subjected to the processes of drying, cold pressing and the like to obtain the positive electrode film sheet. The cold pressing can be performed by a cold rolling mill. The organic solvent in the positive electrode slurry can include one or more of paraxylene, trimethylbenzene, butyl butyrate, heptane and the like, and further can be paraxylene. The surface of the positive electrode current collector coated with the positive electrode slurry can be a single surface of the positive electrode current collector or both surfaces of the positive electrode current collector. The solid content of the positive electrode slurry can be 40-80wt%. The viscosity of the positive electrode slurry at a room temperature can be adjusted to 5,000-25,000 mPa•s. During coating the positive electrode slurry, the coating mass density per unit area (single-sided), measured in dry weight (excluding solvent), can be 15mg/cm²-35 mg/cm². The compaction density of the positive electrode film sheet can be 3.0 g/cm³-3.6 g/cm³, optionally 3.3 g/cm³-3.5 g/cm³.

The "compaction density" used in the present application has a meaning well-known in the field and is one of the reference indicators of the material energy density. In the present application, unless otherwise specified, the compaction density of the electrode layer refers to the ratio of the mass of the electrode active material layer to its volume. The compaction density of the positive electrode layer, the positive electrode plate, the positive electrode film sheet, or the positive electrode film refers to the ratio of the mass of the positive electrode active material layer to its volume, while the compaction density of the negative electrode layer, the negative electrode plate, the negative electrode assembly, or the negative electrode film refers to the ratio of the mass of the negative electrode active material layer to its volume. 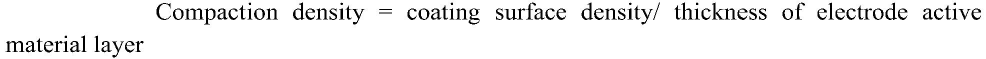 Compaction density = coating surface density/ thickness of electrode active material layer 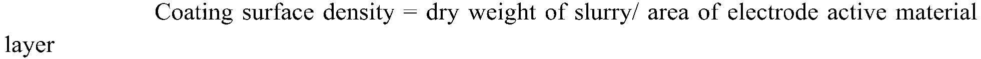 Coating surface density = dry weight of slurry/ area of electrode active material layer

The double-sided thickness of the electrode active material layer corresponds to the sum of the coating surface densities on both sides, while the single-sided thickness corresponds to the coating surface density on one side; and if the electrode active material layers on both sides of the current collector are basically the same, it can be calculated using the following formula: compaction density = single-sided coating surface density/ single-sided thickness of electrode active material layer.

The "single-sided" and "double-sided" of the electrode active material layers refer to position distribution modes relative to the current collector.

The following are some descriptions of the solid electrolyte layer.

The solid electrolyte layer has an effect of conducting ions between the positive and negative electrode layers, and it can also separate the positive and negative electrode layers so as to prevent the positive and negative electrodes from short circuits.

It is to be understood that the solid electrolyte layer includes the solid electrolyte. The solid electrolyte in the solid electrolyte layer can be the solid electrolyte known in the field for use in the solid-state battery.

The types of solid electrolytes in different film layers of the solid-state battery can be the same or different. For example, the solid electrolytes in the positive electrode electrolyte particles and the solid electrolyte layer can be the same or different.

As an optional example, the solid electrolytes in the positive electrode electrolyte particles and the solid electrolyte layer can independently include one or more of the following materials: sulfide solid electrolytes, halide solid electrolytes, oxide solid electrolytes, polymer solid electrolytes, and the like. The type of sulfide solid electrolyte in the solid electrolyte layer may be the same as or different from that in the positive electrode layer (such as the abovementioned positive electrode film). Taking sulfide solid electrolytes as an example, the sulfide solid electrolytes refer to a solid electrolyte containing sulfide electrolyte components, that is, the sulfide solid electrolytes are sulfide electrolytes.

As another optional example, the solid electrolytes in the positive electrode electrolyte particles and the solid electrolyte layer can independently include, but are not limited to, one or more of the oxide solid electrolytes, sulfide solid electrolytes, and halide solid electrolytes. In some of these embodiments, the solid electrolytes in the positive electrode electrolyte particles and the solid electrolyte layer may independently include, but are not limited to, one or more of the Argyrodite-type sulfide electrolytes and halide electrolytes. In which, the optional examples of the oxide solid electrolytes can include LISICON type oxide electrolytes (such as γ-Li₃PO₄), NASICON type oxide electrolytes (such as Li₁₊ₓAlₓGe₂₋ₓ(PO₄)₃, and Li₁₊ₓAlₓTi₂₋ₓ(PO₄)₃, 0≤x≤1), Garnet type (such as Li₇La₃Zr₂O1₂), and Perovskite type oxide electrolytes (such as Li₃ₓLa_{2/3-x}TiO₃, 0≤x≤0.5). The optional examples of the sulfide solid electrolytes can include one or more selected from the groups consisting of Li₁₀GeP₂S₁₂, Li₂S-P₂S₅ binary sulfide-based electrolyte, Argyrodite type (such as Li₆PS₅Cl, Li_{5.5}PS_{5.5}Cl_{1.5}). The optional examples of the halide solid electrolytes can include one or more of Li₃InCl₆, Li₃YCl₆, Li₃ScCl₆, Li₃ErCl₆, Li₂ZrCl₆, etc.

In some implementations, the solid electrolyte layer can be pressed from the solid electrolyte material into the solid electrolyte film sheet.

In some embodiments, the thickness of the solid electrolyte layer can be 0.1-1,000 µm, optionally, 10-100 µm, 100-800 µm, 500-800 µm, etc.

The following are some descriptions of the negative electrode layer.

In the present application, unless otherwise specified, the "negative electrode film" refers to a film which can be used as the negative electrode of the solid-state battery, and includes at least the negative electrode active material layer and generally includes the negative electrode current collector. The negative electrode film includes the silicon-containing negative electrode material described in the first aspect of the present application.

The negative electrode layer can be provided by the negative electrode plate or negative electrode film sheet suitable for use in solid-state battery in the field, or the materials of the negative electrode layer can be directly pressed onto the surface of one side of the solid electrolyte layer to form the negative electrode film layer. The negative electrode film sheet can be combined with other films suitable for negative electrodes to form the negative electrode plate or negative electrode layer.

The negative electrode layer can be prepared by either a dry or wet method. For example, the film can be formed by dry pressing. For another example, it can be coated into a film using the wet method.

The negative electrode layer includes a negative electrode active material layer, and the negative electrode active material layer includes negative electrode active particles, which contain negative electrode active materials.

Optionally, the negative electrode active particles or negative electrode active substances can account for ≥80wt% of the negative electrode active material layer, and further, ≥90wt%.

In some embodiments, the negative electrode plate or negative electrode film sheet may include a negative electrode current collector and a negative electrode active material layer arranged on at least one surface of the negative electrode current collector, and the negative electrode active material layer includes the negative electrode active substances. As an optional example, the negative electrode current collector has two surfaces which are deviated from each other in the thickness direction, and the negative electrode active material layer is arranged on any one or both of the two surfaces, which are deviated from each other, of the negative electrode current collector. In some embodiments, electrode current collector can be a metal foil or a composite current collector. For example, if it is the metal foil, a copper foil can be adopted. In the negative electrode current collector, the composite current collector can include a high molecular substrate layer and a metal layer formed on at least one surface of the high molecular substrate layer. In the negative electrode current collector, the composite current collector can be obtained by forming a metal material on the high polymer material substrate. In the negative electrode current collector, the optional example of the metal material can include at least one of copper, a copper alloy, nickel, a nickel alloy, titanium, a titanium alloy, silver, a silver alloy and the like. In the negative electrode current collector, the optional example of the high molecular substrate can include one or more of polypropylene (PP), polyethylene terephthalate (PET), polybutylene terephthalate (PBT), polystyrene (PS), polyethylene (PE) and the like.

In some embodiments, the negative electrode active material layer may optionally include a negative electrode conductive agent. Optionally, the negative electrode conductive agent can include one or more of superconducting carbon, acetylene black, carbon black, Ketjen black, carbon dots, carbon nanotubes, graphene, and carbon nanofibers. Optionally, the weight percentage of the negative electrode conductive agent in the negative electrode active material layer can be 0-10wt%, optionally, 0.1-10wt%, further optionally, 0.1-2wt%.

In some embodiments, the negative electrode active material layer may optionally include a binder (referred to as a negative electrode binder). As an optional example, the negative electrode binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin. Optionally, the weight proportion of the negative electrode binder in the negative electrode active material layer can be 0-10wt%, further 0-5wt%, even further 1-5wt%, and even further optionally 1-3wt%.

In some embodiments, the negative electrode active material layer may optionally include other additives, such as thickeners (like carboxymethyl cellulose sodium (CMC-Na)). The weight percentage of other additives in the negative electrode active material layer can be 0-15wt%, further optionally 0-10wt%, even further optionally 0-5wt%, even further optionally 0-3wt%, and even further optionally 0-2wt%.

In some embodiments, the negative electrode film sheet (which used as the negative electrode plate) can be prepared by the following modes: performing dry-state mixing on each component used for preparing the negative electrode film sheet, such as the silicon-containing negative electrode material and any other component, then heating, pressurizing and kneading the uniformly mixed materials to form a bulk material, performing hot rolling to form a self-support negative electrode plate, and performing hot rolling and combination on the self-support negative electrode plate and the negative electrode current collector to obtain the negative electrode film sheet, in which, the self-support negative electrode plate can be combined with at least one side (single side or both sides) of the negative electrode current collector. Optionally, a double planetary stirrer can be used for performing dry-state mixing. Optionally, an internal mixer can be used for performing heating, pressurizing and kneading. The method for assembling the solid-state battery by the negative electrode film sheet is suitable for industrial mass production. If the negative electrode material is prepared into the negative electrode active material layer by the dry method, the negative electrode conductive agent can be arranged in the negative electrode material, such that the electron conduction capability of the negative electrode active material layer can be improved.

In some embodiments, the negative electrode plate or negative electrode film sheet can be prepared by the following modes: dispersing each component used for preparing the negative electrode plate or negative electrode film sheet, such as the silicon-containing negative electrode material and any other component into a solvent (the optional example of the solvent is xylene, N-Methyl-2-pyrrolidone (NMP) for example) to form negative electrode slurry. Further, the negative electrode slurry is coated on at least one side surface of the negative electrode current collector, and subjected to the processes of drying, cold pressing and the like to obtain the negative electrode plate or negative electrode film sheet. The cold pressing can be performed by a cold rolling mill. The surface of the negative electrode current collector coated with the negative electrode slurry can be a single surface of the positive electrode current collector or both surfaces of the negative electrode current collector. The solid content of the negative electrode slurry can be 30-70wt%, and optionally, 40-60wt%. During coating the negative electrode slurry, the coating mass density per unit area, measured in dry weight (excluding solvent), can be 1.5mg/cm²-18 mg/cm², but not limited thereto. The compaction density of the negative electrode plate or negative electrode film sheet can be 1.0 g/cm³-2.0 g/cm³, and optionally, 1.0 g/cm³-1.8 g/cm³. If the negative electrode materials are prepared into negative electrode slurry by the wet method and then the negative electrode active material layer is prepared, the binder can be arranged in the negative electrode slurry to assist film formation, and moreover, a good electric contact network can be promoted to be formed among the active particles in the negative electrode active material layer.

Optionally, the positive electrode plate, the solid electrolyte interphase sheet, and the negative electrode plate can be stacked sequentially, and the solid electrolyte interphase sheet is placed between the positive and negative electrode plates, and subjected to hot-rolling to be prepared into the solid-state cell.

Optionally, the positive electrode film sheet, the solid electrolyte interphase sheet, and the negative electrode plate can be stacked sequentially, and the solid electrolyte interphase sheet is placed between the positive and negative electrode film sheets, and subjected to hot-rolling to be prepared into the solid-state cell.

In some embodiments, the solid-state battery cell includes the solid-state cell 52.

In some embodiments, the solid-state cell is an all-solid-state cell.

In some embodiments, the all-solid-state battery cell includes an all-solid-state battery cell.

In some embodiments, the solid-state cell 52 (which can be the all-solid-state cell) includes the positive electrode layer 200, the solid electrolyte layer 100, and the negative electrode layer 300 which are stacked in sequence, in which, one example can refer to FIG. 5. Unless otherwise specified, the negative electrode layer 300 includes the negative electrode film 30.

In some embodiments, the solid-state cell 52 includes the positive electrode layer 200, the solid electrolyte layer 100, and the negative electrode layer 300 which are stacked in sequence, in which, the negative electrode layer 300 includes the negative electrode film 30, the negative electrode film 30 includes the negative electrode current collector 310 and the negative electrode active material layers 320 located on both sides of the negative electrode current collector, and the negative electrode active material layers 320 are arranged between the negative electrode current collector 310 and the solid electrolyte layer 100. One example can refer to FIG. 6.

In some embodiments, the solid-state battery can include an outer package. The outer package can be used for packaging the solid-state cell.

In some embodiments, the outer package of the solid-state battery can be a hard case, such as a hard plastic case, an aluminum case, and a steel case. The outer package of the solid-state battery can also be a soft package, such as a soft package. The material of the soft package can be plastic, and further, the optional example of the plastic can include one or more of polypropylene, polybutylene terephthalate, and poly(butylene succinate).

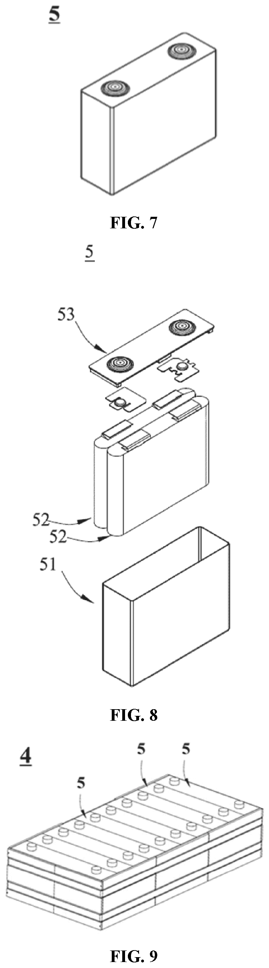

The solid-state battery cell is not particularly limited in shape in the present application, and can be in a cylindrical shape, quadrate shape or other any shapes. For example, FIG. 7 shows the all-solid-state battery cell 5 of a square structure as an example.

In some embodiments, with reference to FIG. 8, the outer package can include the case 51 and a cover plate 53. The case 51 can include a bottom plate and a side plate connected to the bottom plate, and the bottom plate and the side plate enclose to form an accommodating cavity. The case 51 is provided with an opening in communication with the accommodating cavity, and the cover plate 53 can cover the opening to close the accommodating cavity. The solid-state cells 52 are packaged in the accommodating chamber.

There can be one or more solid-state cells 52 in the solid-state battery cell, and those skilled in the art can select the number according to actual requirements.

There can be one or more solid-state cells 52 in the all-solid-state battery cell 5, and those skilled in the art can select the number according to actual requirements.

The solid-state battery can be a battery module 4 or a battery pack 1.

The battery module includes at least one solid-state battery cell. There can be one or more solid-state battery cells in the battery module, and those skilled in the art can select the proper number according to the application and the capacity of the battery module.

In some embodiments, in the battery module, a plurality of solid-state battery cells can be sequentially arranged along the length direction of the battery module. Definitely, the plurality of solid-state battery cells can also be arranged according to any other mode. Further, the plurality of solid-state battery cells can be further fixed through fasteners.

Optionally, the battery module can also include a shell with an accommodating space; and the plurality of solid-state battery cells are accommodated in the accommodating space.

In FIG. 9, a battery module 4 is taken as an example. With reference to FIG. 9, in the battery module 4, a plurality of all-solid-state battery cells 5 can be sequentially arranged along the length direction of the battery module 4. Definitely, the plurality of all-solid-state battery cells can also be arranged according to any other mode. Further, the plurality of all-solid-state battery cells 5 can be further fixed through fasteners.

Optionally, the battery module 4 can also include a shell with an accommodating space; and the plurality of all-solid-state battery cells 5 are accommodated in the accommodating space.

In some embodiments, the battery modules can also be assembled into the battery pack; and there can be one or more battery modules in the battery pack, and those skilled in the art can select appropriate proper number according to the application and the capacity of the battery pack.

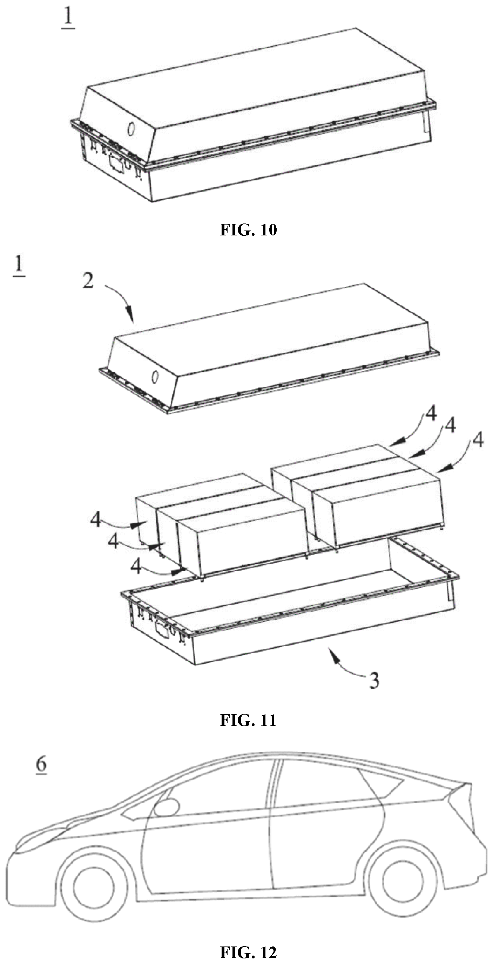

In FIG. 10 and FIG. 11, a battery pack 1 is taken as an example. With reference to FIG. 10 and FIG. 11, the battery pack 1 can include a battery box and a plurality of battery modules 4 arranged in the battery box. The battery box includes an upper box body 2 and a lower box body 3, and the upper box body 2 can cover the lower box body 3 and form a closed space for accommodating the battery modules 4. The plurality of battery modules 4 can be arranged in the battery box in any mode.

In some embodiments, the electrical apparatus includes the solid-state battery in any of the embodiments provided by the present application.

Optionally, the solid-state battery can be used as a power supply for the electrical apparatus, or as an energy storage unit for the electrical apparatuses. The electrical apparatuses can include mobile devices, electric vehicles, electric trains, ships, satellites, and energy storage systems, but are not limited thereto. The mobile devices can, for example, be smartphones, and laptops; the electric vehicles can, for example, be pure electric vehicles, hybrid electric vehicles, plug-in hybrid electric vehicles, electric bicycles, electric scooters, electric golf carts, electric trucks, electric motorcycles, and electric tools, but are not limited thereto. The electrical apparatuses can also be applied in military equipment, aerospace, and other fields, and can also be used in energy storage power systems for hydroelectric, thermal, wind, and solar power stations.

As the electrical apparatus, the solid-state battery can be selected based on the use needs.

FIG. 12 shows an electrical apparatus 6 as an example. This electrical apparatus can be the pure electric vehicle, the hybrid electric vehicle, or the plug-in hybrid electric vehicle. To meet the high power and high energy density requirements of this electrical apparatus for the solid-state batteries, the battery pack or battery module can be used.

The apparatus serving as another example can be the mobile phone, tablet, laptop, etc. Such apparatuses typically require a slim design and can use the solid-state batteries as the power supply.

Some embodiments of the present application are described below. The embodiments described below are exemplary and are provided only to explain the present application, and should not be construed as limiting the present application. For techniques or conditions not specified in the embodiments, they are implemented as described above, or according to techniques or conditions described in the literature in the field, or according to product instructions. Reagents or instruments used without a specified manufacturer are conventional products that can be obtained commercially, or can be synthesized in a conventional manner from commercially available products.

Unless otherwise specified, in the following examples and contrast examples, raw materials with the same chemical formula come from the same synthesis batch or the same product number, or are prepared according to the same stoichiometric ratio and by the same method.

In the following examples, room temperature refers to 20-30°C.

### Test of Dᵥ50:

In the following examples and contrast examples, the Dᵥ50 of the positive electrode active particles, the positive electrode electrolyte particles, and the oxygen storage particles can be tested and confirmed using the following method: equipment model: MasterSizer 2000 laser particle size analyzer, reference standard procedure: GB/T19077-2016/ISO 13320:2009; testing procedure: an appropriate amount of the sample to be tested (under sample concentration of 8%-12%(w/v)) was collected, 20 mL of solvent (such as xylene or deionized water) was added, and subjected to infraredexcess for 5 min (53 KHz/120 W) to ensure complete dispersion of the sample; and then, the sample was measured according to the GB/T19077-2016/ISO 13320:2009 standard.

The transmission electron microscope (TEM) has the model of FEI/Talos, F200X, with a testing acceleration voltage of 200 kV.

XRD test equipment and parameters: D8 Advance Da Vinci X, Cu Kα1, scan range of 10°-110° (including 20°-110°), and scan speed of 5°/min.

Unless otherwise specified, in the following examples and contrast examples, the steps involving the sulfide electrolyte materials are carried out in an argon atmosphere.

It is to be noted that in the following implementation modes and examples, the sulfide all-solid-state batteries are used as optional examples of the solid-state batteries.

Unless otherwise specified, in the following examples, the counting method for "approximate number" in micrometers (µm) or nanometers (nm) is as follows: for number precise to one decimal place, the fluctuation range is within ±0.02; for number between 1 and 9 precise to the nearest whole number, the fluctuation range is within ±0.2; for number between 10 and 99 precise to the nearest whole number, the fluctuation range is within ±2.

### I. Preparation examples

In each example below, the following method is utilized to prepare the sulfide all-solid-state battery, which includes the following steps:
step 1: in a glove box filled with argon, uniformly grinding the positive electrode active particles, the sulfide solid electrolyte, the conductive agent, and the binder in a mortar to obtain composite positive electrode powder;
step 2: pressing the sulfide electrolyte in the tablet mold to form the solid electrolyte interphase sheet for forming the solid electrolyte layer in the all-solid-state battery;
step 3: spreading the composite positive electrode powder on the surface of one side of the solid electrolyte interphase sheet, pressing to form a composite film sheet including the positive electrode layer and the solid electrolyte layer, and demolding to obtain the positive electrode layer/electrolyte layer composite film sheet;
step 4: assembling the positive electrode layer/electrolyte layer composite film sheet prepared in step 3 in a pressure battery mold, assembling the silicon-containing negative electrode material on the other side of the solid electrolyte layer, and applying pressure to form the negative electrode layer, in which, the obtained all-solid-state battery (with reference to FIG. 5) is the sulfide all-solid-state battery, including the positive electrode layer, the solid electrolyte layer, and the negative electrode layer which are sequentially stacked.

### Example 1. Preparation of coated silicon-based material, silicon-containing negative electrode material, negative electrode film, and corresponding sulfide all-solid-state battery

### 1.1. Preparation of coated silicon-based material

(1) preparation of a sulfide electrolyte material for coating: in a glove box filled with argon, weighing 4.14 g of Li₂S, 0.419 g of P₂S₅, and 9.2g of SiS₂ as precursor raw materials and feeding into a ball mill tank, adding zirconium oxide (ZrO₂ ball milling beads), performing ball milling at 320 r/min for 40 h, putting the obtained precursor mixture into a carbon crucible, then sealing in a silicone tube, and sintering at 600°C for 8 h to obtain a sulfide electrolyte (serving as a first sulfide solid electrolyte) having a chemical formula of Li_{1.82}SiP_{0.036}S₃ power for coating the silicon-based material.

The components of the obtained sulfide solid electrolyte were analyzed by XRD testing to determine the chemical formula of Li_{1.82}SiP_{0.036}S₃.

The measured ionic conductivity of i_{1.82}SiP_{0.036}S₃ was 2.4 mS/cm, meeting "≥0.1mS/cm", further meeting "≥0.5mS/cm", still further meeting "≥1mS/cm". The Young's modulus ratio of Li_{1.82}SiP_{0.036}S₃ to elemental silicon met that R_{E} was less than 1, or R_{E} was less than or equal to 0.8.

The Dᵥ50 and particle size of the Li_{1.82}S1P_{0.036}S₃ powder were both within the range of 0.1-1 µm.

(2) coating: mixing the obtained Li_{1.82}SiP_{0.036}S₃ powder and Si powder (with the Dᵥ50 of 5 µm) in a weight ratio of 1:50, performing mechanical dry coating to form an electrolyte coating layer on the particle surface of the Si powder, and sintering the electrolyte coating layer at 600°C for 6 h to compact the coating layer to obtain the coated silicon-based material.

In this example, in the coated silicon-based material, the silicon-based body was Si, and the electrolyte coating layer was composed of the sulfide electrolyte Li_{1.82}SiP_{0.036}S₃.

The morphology of the coated silicon-based material was observed by a TEM method, and the thickness of the electrolyte coating layer was about 10 nm.

### 1.2. Preparation of silicon-containing negative electrode material

A composite of the coated silicon-based material (Li_{1.82}SiP_{0.036}S₃-coated Si powder) and the binder PVDF in a weight ratio of 97:3 was used as the silicon-containing negative electrode material.

### 1.3. Preparation of sulfide all-solid-state battery

100 mg of sulfide electrolyte LiPSCl powder was weighed and pre-pressed at 100 MPa without pressure maintaining to obtain a solid electrolyte interphase sheet.

NCM811 powder, sulfide electrolyte LiPSCl, and conductive carbon fiber (VGCF) were manually ground in a mortar according to a weight ratio of 70:28:2 for 10 min to be mixed uniformly so as to obtain composite positive electrode powder.

18 mg of the composite positive electrode powder was weighed and uniformly spread on the surface of one side of the solid electrolyte interphase sheet, and cold pressing was performed to form a sheet at the pressure of 420 MPa, and maintaining the pressure for 5 min to form a composite film sheet composed of the positive electrode layer and the solid electrolyte layer.

The silicon-containing negative electrode material prepared in step 1.2 was dispersed in the solvent NMP (solid content of 60wt%), the mixture was coated on the other side of the solid electrolyte layer in the composite film sheet according to a coating surface density of 2.5 mg/cm², and dried to form the negative electrode layer, thus obtaining obtain the sulfide all-solid-state battery including the positive electrode layer (corresponding to the positive electrode film), the solid electrolyte layer (corresponding to the solid electrolyte interphase sheet), and the negative electrode layer (corresponding to the negative electrode film) which were stacked in sequence.

### Example 2. Dᵥ50 of silicon-based material was changed.

The coated silicon-based material, the silicon-containing negative electrode material, the negative electrode film, and corresponding sulfide all-solid-state battery were prepared using the method essentially the same as in the Example 1, with difference in that the silicon-based material was replaced with Si powder having Dᵥ50 of 1 µm.

### Example 3. Dᵥ50 of silicon-based material was changed.

The coated silicon-based material, the silicon-containing negative electrode material, the negative electrode film, and corresponding sulfide all-solid-state battery were prepared using the method essentially the same as in the Example 1, with difference in that the silicon-based material was replaced with Si powder having Dᵥ50 of 8 µm.

### Example 4. Coating amount of electrolyte coating layer in coated silicon-based material was changed.

The coated silicon-based material, the silicon-containing negative electrode material, the negative electrode film, and corresponding sulfide all-solid-state battery were prepared using the method essentially the same as in the Example 1, with difference in that in the coating step, the weight ratio of Li_{1.82}SiP_{0.036}S₃ powder to Si powder was changed to 1:20.

### Example 5. Coating amount of electrolyte coating layer in coated silicon-based material was changed.

The coated silicon-based material, the silicon-containing negative electrode material, the negative electrode film, and corresponding sulfide all-solid-state battery were prepared using the method essentially the same as in the Example 1, with difference in that in the coating step, the weight ratio of Li_{1.82}SiP_{0.036}S₃ powder to Si powder was changed to 1:70.

Examples 6-7. The coated silicon-based material, the silicon-containing negative electrode material, the negative electrode film, and corresponding sulfide all-solid-state battery were prepared using the method essentially the same as in the Example 1, with difference in that the type of the silicon-based body and the coating thickness in the coated silicon-based material were changed.

Examples 8-9. The coated silicon-based material, the silicon-containing negative electrode material, the negative electrode film, and corresponding sulfide all-solid-state battery were prepared using the method essentially the same as in the Example 1, with difference in that the type of the first sulfide solid electrolyte and coating thickness of the electrolyte coating layer were changed.

Examples 10-14. The coated silicon-based material, the silicon-containing negative electrode material, the negative electrode film, and corresponding sulfide all-solid-state battery were prepared using the method essentially the same as in the Example 1, with difference in that the type and ratio of each component in the silicon-containing negative electrode material were changed.

### Contrast Example 1. No electrolyte coating layer

The silicon-containing negative electrode material, the negative electrode film, and the corresponding sulfide all-solid-state battery were prepared using the method basically the same as in the Example 1, with difference in that Si powder without the electrolyte coating layer (Dᵥ50 of 5 µm) was used instead of the coated silicon-based material (Li_{1.82}SiP_{0.036}S₃-coated Si powder).

### Contrast Example 2. No electrolyte coating layer

The silicon-containing negative electrode material, the negative electrode film, and the corresponding sulfide all-solid-state battery were prepared using the method basically the same as in the Example 2, with difference in that in the silicon-containing negative electrode material, Si powder without the electrolyte coating layer (Dᵥ50 of 1 µm) was used instead of the coated silicon-based material (Li_{1.82}SiP_{0.036}S₃-coated Si powder).

### Contrast Example 3. No electrolyte coating layer

The silicon-containing negative electrode material, the negative electrode film, and the corresponding sulfide all-solid-state battery were prepared using the method basically the same as in the Example 3, with difference in that in the silicon-containing negative electrode material, Si powder without an electrolyte coating layer (Dᵥ50 of 8 µm) was used instead of the coated silicon-based material (Li_{1.82}SiP_{0.036}S₃-coated Si powder).

### Contrast Example 4. The sulfide solid electrolyte in the electrolyte coating layer was replaced with a non-sulfide solid electrolyte LLZTO.

The silicon-containing negative electrode material, the negative electrode film, and the corresponding sulfide all-solid-state battery were prepared using the method basically the same as in the Example 1, with difference in that in the silicon-containing negative electrode material, lithium lanthanum zirconium tantalum oxide solid electrolyte LLZTO powder with similar Dᵥ50 was used instead of sulfide solid electrolyte Li_{1.82}SiP_{0.036}S₃ to coat Si powder. The Young's modulus of LLZTO was higher than that of Si, corresponding to R_{E}>1.

Relevant parameters of the Examples 1-14 and Contrast Examples 1-4 are shown in Tables 1-2.

**Table 1.**

| No. | Coated silicon-based material | | | | | |
|---|---|---|---|---|---|---|
| | Silicon-based material | | Electrolyte coating layer | | | |
| | Type | Dᵥ50 of raw materials | Chemical formula of first sulfide solid electrolyte | Weight ratio of chemical formula of first sulfide solid electrolyte to silicon-based body | Weight proportion of chemical formula of first sulfide solid electrolyte in coated silicon-based material | Thickness of electrolyte coating layer |
| Example 1 | Si powder | 5µm | Li_{1.82}SiP_{0.036}S₃ | 1:50 AM | 1.96% | About 10nm |
| Example 2 | Si powder | 1µm | Li_{1.82}SiP_{0.036}S₃ | 1:50 AM | 1.96% | About 10nm |
| Example 3 | Si powder | 8µm | Li_{1.82}SiP_{0.036}S₃ | 1:50 AM | 1.96% | About 10nm |
| Example 4 | Si powder | 5µm | Li_{1.82}SiP_{0.036}S₃ | 1:20 AM | 4.76% | About 40nm |
| Example 5 | Si powder | 5µm | Li_{1.82}SiP_{0.036}S₃ | 1:70 | 1.41% | 5nm |
| Example 6 | Silicon-carbon compound, silicon content of 55wt% | About 5µm | Li_{1.82}SiP_{0.036}S₃ | 1:50 AM | 1.96% | 15nm |
| Example 7 | Silicon oxide | About 5µm | Li_{1.82}SiP_{0.036}S₃ | 1:50 AM | 1.96% | 15nm |
| Example 8 | Si powder | About 5µm | Li2S-P2S5(7:3) | 1:50 AM | 1.96% | 11nm |
| Example 9 | Si powder | About 5µm | Li2S-B2S3(4:6) | 1:50 AM | 1.96% | 12nm |
| Example 10 | Si powder | 5µm | Li_{1.82}SiP_{0.036}S₃ | 1:50 AM | 1.96% | About 10nm |
| Example 11 | Si powder | 5µm | Li_{1.82}SiP_{0.036}S₃ | 1:50 AM | 1.96% | About 10nm |
| Example 12 | Si powder | 5µm | Li_{1.82}SiP_{0.036}S₃ | 1:50 AM | 1.96% | About 10nm |
| Example 13 | Si powder | 5µm | Li_{1.82}SiP_{0.036}S₃ | 1:50 AM | 1.96% | About 10nm |
| Example 14 | Si powder | 5µm | Li_{1.82}SiP_{0.036}S₃ | 1:50 AM | 1.96% | About 10nm |
| Contrast Example 1 | Si powder | 5µm | / | / | / | / |
| Contrast Example 2 | Si powder | 1µm | / | / | / | / |
| Contrast Example 3 | Si powder | 8µm | / | / | / | / |
| Contrast Example 4 | Si powder | 5µm | LLZTO, Ionic conductivity of 0.4mS/cm | 1:50 AM | 1.961% | 8nm |

**Table 2.**

| No. | Silicon-containing negative electrode material | | | | | | |
|---|---|---|---|---|---|---|---|
| | Weight percentage of each component in silicon-containing negative electrode material (%) | | | | | | |
| | Coated silicon-based material | Second sulfide solid electrolyte/ blended solid electrolyte (Type/weight proportion) | | Conductive agent (Type/weight proportion) | | Binder (Type/weight proportion) | |
| Example 1 | 97 | None | 0 | None | 0 | PVDF | 3% |
| Example 2 | The same as Example 1 | | | | | | |
| Example 3 | The same as Example 1 | | | | | | |
| Example 4 | The same as Example 1 | | | | | | |
| Example 5 | The same as Example 1 | | | | | | |
| Example 6 | The same as Example 1 | | | | | | |
| Example 7 | The same as Example 1 | | | | | | |
| Example 8 | The same as Example 1 | | | | | | |
| Example 9 | The same as Example 1 | | | | | | |
| Example 10 | 99 | None | 0.5 | VGCF | 0.4 | PVDF | 0.1 |
| Example 11 | 69 | None | 1 | VGCF | 10 | PVDF | 20 |
| Example 12 | 80 | Li₂S-SiS₂ | 5 | VGCF | 5 | PVDF | 10 |
| Example 13 | 64.9 | Li₆PS₅Cl | 30 | VGCF | 0.1 | PVDF | 5 |
| Example 14 | 95 | Li₂S-P₂S₅ | 2 | VGCF | 2 | PVDF | 1 |
| Contrast Example 1 | The same as Example 1 | | | | | | |
| Contrast Example 2 | The same as Example 2 | | | | | | |
| Contrast Example 3 | The same as Example 3 | | | | | | |
| Contrast Example 4 | The same as Example 1 | | | | | | |

### II. Test method

### (1) Material performance test

### 1. Dᵥ50

The Dᵥ50 of the particles in the solid material was confirmed using the following method: equipment model: MasterSizer 2000 laser particle size analyzer, reference standard procedure: GB/T19077-2016/ISO 13320:2009, testing process: an appropriate amount of the sample to be tested (under sample concentration of 8-12%(w/v) under shading degree) was collected, 20 mL of solvent was added, the sample was subjected to infraredexcess for 5 min (53 KHz/120 W) to ensure complete dispersion of the sample; and then, the sample was measured according to the standard GB/T19077-2016/ISO 13320:2009.

The solvent used for testing the Dᵥ50 of the particles in the coated sulfide electrolyte material could be xylene.

The solvent used for testing the Dᵥ50 of the silicon-based materials could be deionized water.

2. XRD test instruments and parameters: D8 Advance Da Vinci X, Cu Kα1; scan range (2θ): 10°-110° (including 20°-110°); and scan speed: 5°/min.

The structure and composition of the prepared sulfide electrolyte material for coating could be confirmed.

3. The transmission electron microscope (TEM) has the model of FEI/Talos, F200X, with a testing acceleration voltage of 200 kV. This instrument integrates high-resolution scanning/transmission electron microscopy (STEM) and TEM imaging capabilities, as well as energy-dispersive X-ray spectroscopy (EDS) signal detection and three-dimensional chemical characterization based on component mapping.

The coating structure and components of the coating layer of the coated silicon-based material could be tested and analyzed.

### 4. Young's modulus

Sample: first sulfide solid electrolyte and silicon powder; the electrolyte material was dispersed with NMP and applied to a silicon wafer, and then dried for testing; and the silicon powder was dispersed in deionized water and applied to the silicon wafer, and then dried for testing.

The Young's modulus of the solid electrolyte could be measured using an atomic force microscope (AFM, Dimension icon/ Dimension iconXR, equipped with a QNM module). By measuring the shear modulus under different pressures and fitting based on the data of pressure versus shear modulus, an average Young's modulus can be obtained, and this value can be used as the "Young's modulus" test value in the present application.

### 5. Test of ionic conductivity of solid electrolyte materials

The ionic conductivity was measured by alternating current impedance spectroscopy (EIS). The detailed process was as follows: 120 mg of solid electrolyte powder was poured into a tablet mold with diameter of 10 mm, and pressed into a dense disc at 360 MPa; then a cylindrical stainless steel current collector with diameter of 10 mm was used for clamping the solid electrolyte film sheet at 120 MPa in the mold, and then the current collector was connected to an electrochemical workstation to perform electrochemical impedance test (EIS) on the solid electrolyte film sheet under bias voltage of 10 mV and within a frequency range of 10⁶-10 Hz. In electrochemical impedance spectroscopy, a point that the curve intersected a Z' axis from a high-frequency region to a low-frequency region was recorded as the resistance R, and the ionic conductivity could be calculated by Equation (1):
$σ = \frac{1}{R} ⋅ \frac{d}{A}$ (1)
in which, d referred to the thickness of the solid electrolyte interphase sheet, and A referred to the contact area between the solid electrolyte interphase sheet and the current collector.

### (2) Battery performance test

The electrochemical performances of the negative electrode plate and the corresponding all-solid-state battery were tested by solid-state mold batteries, and the battery test window was 4.3-2.0V (potential relative to lithium).

### 1. Initial discharge capacity

Test process: the assembled all-solid-state battery was charged at a current density of 0.1 C to reach 4.3 V, stood for 10 min, and then discharged at a current density of 0.1C to reach 2.0 V, so as to obtain the initial discharge capacity of the battery. The battery was tested at 25±3°C, with 0.1C=200 mA/g.

### 2. Initial Coulombic efficiency

The initial discharge capacity tested at 0.1C was divided by the initial charge capacity to obtain the initial Coulombic efficiency of the battery.

### 3. Rate performance

Test procedure: the charge rate of the all-solid-state battery was fixed at 0.1 C, and then the all-solid-state battery was discharged at rates of 0.1 C, 0.33 C, 1 C, 2 C, and 3 C, with 3 cycles at each rate; the battery voltage test window was 4.3-2.0 V vs. Li⁺/Li, and the battery was tested at 25±3°C, in which, 1C=200 mA/g.

### 4. Cycle performance

The assembled solid-state battery was first subjected to 3 cycles of constant-current charge and discharge at a current density of 0.1 C to obtain the initial discharge capacity and initial Coulombic efficiency; then, a long-term cycle test was conducted at a current density of 0.33 C for 100 cycles to calculate the cycle capacity retention of the battery. The battery voltage test window was 4.3-2.0 V vs. Li⁺/Li, and the battery was tested at 25±3°C, in which, 1C=200 mA/g.

### III. Test analysis results

The test results of the Examples 1-14 and the Contrast Examples 1-4 are shown in Table 3.

The sulfide solid-state batteries prepared in each embodiment all showed good discharge capacity, rate performance and cycle performance, as well as good initial Coulombic efficiency.

The electrolyte coating layer in the present application was not used in the Contrast Examples 1-3; compared with the Examples 1-3, in the Contrast Examples 1-3, the discharge capacity, rate performance and cycle performance obviously degraded respectively, especially the cycle capacity retention rate reduced seriously, obviously, the cycle stability was influenced seriously, and in addition, the initial Coulombic efficiency also decreased obviously;

In the Contrast Example 4, for the material of the coating layer, the non-sulfide solid electrolyte LLZTO was used instead of the first sulfide solid electrolyte in the Example 1 to coat the Si powder, and the first Coulombic efficiency, discharge capacity, rate performance and cycle performance also obviously degraded. The Young's modulus of the LLZTO electrolyte was higher than that of Si (R_{E}>1), the volume expansion of the silicon-based body could not be buffered, consequently, the interface contact of the negative electrode layer was poor, as a result, the discharge capacity, rate performance and cycle performance obviously degraded, and moreover, the initial Coulombic efficiency also decreased obviously.

**Table 3.**

| No. | Initial Coulombic efficiency (%) | Discharge specific capacity under 0.1C (mAh/g) | Discharge specific capacity under 0.33C (mAh/g) | Discharge specific capacity under 0.5C (mAh/g) | Discharge specific capacity under 1C (mAh/g) | Capacity retention after 100 cycles (0.1C) (%) |
|---|---|---|---|---|---|---|
| Example 1 | 85 | 200 | 180.5 | 160 | 140 | 90 |
| Example 2 | 83 | 190 | 185 | 155 | 135 | 87 |
| Example 3 | 82 | 187 | 179 | 150 | 130 | 80 |
| Example 4 | 81 | 185 | 175 | 145 | 125 | 79 |
| Example 5 | 80 | 183 | 171 | 141 | 124 | 78 |
| Example 6 | 79 | 180 | 170 | 140 | 123 | 77 |
| Example 7 | 76 | 178 | 168 | 138 | 120 | 75 |
| Example 8 | 75 | 176 | 166 | 137 | 118 | 74 |
| Example 9 | 74 | 175 | 165 | 136 | 116 | 73 |
| Example 10 | 73 | 172 | 163 | 134 | 115 | 72 |
| Example 11 | 72 | 170 | 161 | 133 | 112 | 70 |
| Example 12 | 70 | 169 | 160 | 130 | 110 | 69 |
| Example 13 | 69 | 168 | 158 | 129 | 109 | 68 |
| Example 14 | 57 | 167 | 154 | 128 | 108 | 67 |
| Contrast Example 1 | 65 | 160 | 120 | 100 | 80 | 50 |
| Contrast Example 2 | 63 | 150 | 115 | 90 | 60 | 40 |
| Contrast Example 3 | 61 | 145 | 110 | 80 | 50 | 35 |
| Contrast Example 4 | 60 | 144 | 109 | 79 | 49 | 34 |

The above description of various embodiments tends to emphasize the differences between each embodiment, and their similarities or common features can be cross-referenced. For the sake of brevity, they will not be repeated here. The technical features of the embodiments described above can be combined in any manner. To keep the description concise, not all possible combinations of the technical features in the above embodiments have been described. However, as long as these combinations of technical features do not conflict with each other, they should be considered within the scope described in the present specification. It is to be noted that the present application is not limited to the above embodiments. The above embodiments are merely examples, and any embodiments within the technical solutions of the present application that have the same technical concept and achieve the same functional effects are included within the technical scope of the present application. The embodiments described above only represent a few implementation modes of the embodiments of the present application and are described in detail, but this should not be construed as a limitation on the patent scope. In addition, without departing from the gist of the present application, any modifications that those skilled in the art can conceive of for the embodiments, or other methods constructed by combining part of the elements in the embodiments, are also included within the scope of the present application.

## Claims

1. A silicon-containing negative electrode material, comprising a coated silicon-based material, wherein the coated silicon-based material comprises a silicon-based body and an electrolyte coating layer coating at least part of a surface of the silicon-based body, the electrolyte coating layer comprising a sulfide solid electrolyte.

2. A silicon-containing negative electrode material, comprising a coated silicon-based material, wherein the coated silicon-based material comprises a silicon-based body and an electrolyte coating layer coating at least part of a surface of the silicon-based body, the electrolyte coating layer comprising a sulfide solid electrolyte, wherein:
in the coated silicon-based material, an ionic conductivity of the sulfide solid electrolyte is greater than or equal to 0.1 mS/cm under a test condition of 20°C, and Young's modulus ratio of the sulfide solid electrolyte to the silicon-based body is less than 1 under a test condition of 30°C;
optionally, the ionic conductivity of the sulfide solid electrolyte is greater than or equal to 0.5 mS/cm under the test condition of 20°C, and further optionally, the ionic conductivity of the sulfide solid electrolyte is greater than or equal to 1 mS/cm under the test condition of 20°C; and
optionally, the Young's modulus ratio of the sulfide solid electrolyte to the silicon-based body is less than or equal to 0.8 under the test condition of 30°C.

3. The silicon-containing negative electrode material according to claim 1 or 2, wherein the sulfide solid electrolyte comprises a Li₂S-SiS₂-P₂S₅ ternary sulfide electrolyte, wherein:
optionally, in the Li₂S-SiS₂-P₂S₅ ternary sulfide electrolyte, an atomic molar ratio of an Li element to an Si element is recorded as R_{Li/Si}, and the atomic molar ratio of a P element to an Si element is recorded as R_{P/Si}, 1.80<R_{Li/Si}<1.84, 10.34<R_{P/Si}<0.38; and
further optionally, the Li₂S-SiS₂-P₂S₅ ternary sulfide electrolyte includes Li_{1.82}SiP_{0.036}S₃.

4. The silicon-containing negative electrode material according to claim 1 or 2, wherein:
the silicon-based body comprises one or more selected from the group consisting of elemental silicon, a silicon-carbon compound, a silicon oxide, and a silicon-carbon compound; and
optionally, the silicon-based body comprises a silicon-carbon compound, and the silicon-carbon compound comprises a porous carbon matrix and nano-silicon located in pores of the porous carbon matrix.

5. The silicon-containing negative electrode material according to any one of claims 1 to 4, wherein the coated silicon-based material meets one or more of the following characteristics:
in the coated silicon-based material, a weight ratio of the sulfide solid electrolyte to the silicon-based body is 1: (20-70), optionally, 1: (45-55);
a weight proportion of the sulfide solid electrolyte in the coated silicon-based material is 1-5wt%, optionally, 1.5-2.5wt%; and
a thickness of the electrolyte coating layer is 1-100 nm, optionally, 10-50 nm.

6. The silicon-containing negative electrode material according to any one of claims 1 to 5, wherein Dᵥ50 or particle size of the silicon-based body is less than or equal to 50 µm, optionally, 1-50 µm, further optionally, 1-8 µm, and still further optionally, 4-6 µm.

7. The silicon-containing negative electrode material according to any one of claims 1 to 6, wherein:
the electrolyte coating layer comprises dotted particles of the sulfide solid electrolyte; and
optionally, the particle sizes of the dotted particles of the sulfide solid electrolyte is less than or equal to 1 µm, optionally, 0.1-1 µm.

8. The silicon-containing negative electrode material according to any one of claims 1 to 7, wherein in at least part of the coated silicon-based material, the sulfide solid electrolyte is distributed on the surface of the silicon-based body in a discontinuous manner.

9. The silicon-containing negative electrode material according to any one of claims 1 to 8, wherein the weight proportion of the coated silicon-based material in the silicon-containing negative electrode material is greater than or equal to 50wt%, optionally, 50-99wt%, further optionally, 85-97wt%.

10. The silicon-containing negative electrode material according to any one of claims 1 to 9, further comprising or not comprising a blended solid electrolyte, wherein:
optionally, the blended solid electrolyte comprises a blended sulfide solid electrolyte; and
further optionally, the blended solid electrolyte comprises one or more selected from the group consisting of thio LISICON, Li₆PS₅Cl, Li₁₀SnP₂S₁₂, Li₂S-P₂S₅ binary sulfur-based electrolytes, Li₂S-SiS₂ binary sulfur-based electrolytes, and Li₂S-B₂S₃ binary sulfur-based electrolytes.

11. The silicon-containing negative electrode material according to 10, wherein the weight proportion of the blended solid electrolyte in the silicon-containing negative electrode material is 0-30wt%, optionally, 0.5-5wt%.

12. The silicon-containing negative electrode material according to any one of claims 1 to 11, meeting one or more of the following characteristics:
the silicon-containing negative electrode material comprises or does not comprise a negative electrode conductive agent, wherein optionally, the weight proportion of the negative electrode conductive agent in the silicon-containing negative electrode material is 0-10wt%, optionally, 0.1-10wt%, and further optionally, 0.1-2wt%; and
the silicon-containing negative electrode material comprises a negative electrode binder, wherein optionally, the weight proportion of the negative electrode binder in the silicon-containing negative electrode material is 0.1-20wt%, further optionally, 1-10wt%.

13. A manufacturing method for a coated silicon-based material, comprising the following steps:
physically blending a sulfide solid electrolyte with a silicon-based body, and sintering to form an electrolyte coating layer containing the sulfide solid electrolyte on at least part of the surface of the silicon-based body to obtain the coated silicon-based material.

14. The manufacturing method for a coated silicon-based material according to claim 13, wherein the sulfide solid electrolyte is as defined in claim 2 or 3.

15. The manufacturing method for a coated silicon-based material according to claim 13 or 14, meeting one or more of the following characteristics:
in the step of physically blending the sulfide solid electrolyte with the silicon-based body, the weight ratio of the sulfide solid electrolyte to the silicon-based body is 1: (20-70), optionally, 1: (45-55);
the method for physically blending is a dry blending method;
the sintering atmosphere for sintering is an argon atmosphere;
the sintering temperature for sintering is 550-650°C, optionally, 580-620°C; and
the sintering lasts for 6-10 h.

16. The manufacturing method for a coated silicon-based material according to any one of claims 13 to 15, wherein the sulfide solid electrolyte is manufactured by the method comprising the following steps:
mixing precursor raw materials of the sulfide solid electrolyte, carrying out ball milling, and sintering in a sealed state to obtain the sulfide solid electrolyte.

17. The manufacturing method for a coated silicon-based material according to claim 16, meeting one or more of the following characteristics:
a method for ball milling is a dry-process ball milling method;
ball milling beads used in ball milling comprise zirconia ball milling beads;
the rotating speed in ball milling is 300-400 r/min, optionally, 300-350 r/min; and
the ball milling lasts for 36-48 h.

18. The manufacturing method for a coated silicon-based material according to any one of claims 13 to 17, wherein the coated silicon-based material is the coated silicon-based material in the silicon-containing negative electrode material according to any one of claims 1 to 12.

19. A negative electrode film, comprising a negative electrode current collector and a negative electrode active material layer located on at least one side of the negative electrode current collector, wherein the negative electrode active material layer comprises the silicon-containing negative electrode material according to any one of claims 1 to 12.

20. The negative electrode film according to claim 19, wherein the negative electrode film is an all-solid-state negative electrode film.

21. A solid-state battery, comprising the negative electrode film according to claim 19 or 20.

22. The solid-state battery according to claim 21, wherein the solid-state battery is a sulfide all-solid-state battery.

23. The solid-state battery according to claim 21 or 22, wherein the solid-state battery is a solid-state lithium-ion battery.

24. An electrical apparatus, comprising at least one of the positive electrode film according to claim 19 or 20 and the solid-state battery according to any one of claims 21 to 23.
